(19) **Europäisches Patentamt / European Patent Office / Office européen des brevets**

(11) **EP 1 228 556 B1**

(12) **EUROPEAN PATENT SPECIFICATION**

(45) Date of publication and mention
of the grant of the patent:
**13.04.2011  Bulletin 2011/15**

(51) Int Cl.:
*H01S 3/17* *(2006.01)*     *C03C 27/10* *(2006.01)*
*C03C 27/06* *(2006.01)*    *C09J 1/00* *(2006.01)*
*B23B 17/00* *(2006.01)*    *B32B 18/00* *(2006.01)*
*B32B 15/00* *(2006.01)*    *C03C 10/00* *(2006.01)*
*C03C 3/12* *(2006.01)*     *C03C 3/076* *(2006.01)*
*C03C 3/32* *(2006.01)*     *C03C 3/097* *(2006.01)*
*C03C 3/089* *(2006.01)*    *C03C 3/06* *(2006.01)*
*C03C 3/14* *(2006.01)*     *C03C 3/247* *(2006.01)*

(21) Application number: **00991912.7**

(22) Date of filing: **01.11.2000**

(86) International application number:
**PCT/US2000/041721**

(87) International publication number:
**WO 2001/032580 (10.05.2001 Gazette 2001/19)**

(54) **LOW TEMPERATURE JOINING OF MATERIALS**

VERBINDUNG VON MATERIALIEN BEI NIEDRIGEN TEMPERATUREN

ASSEMBLAGE DE MATERIAUX A BASSE TEMPERATURE

(84) Designated Contracting States:
**AT BE CH CY DE DK ES FI FR GB GR IE IT LI LU MC NL PT SE TR**

(30) Priority:  **01.11.1999   US 430885**

(43) Date of publication of application:
**07.08.2002   Bulletin 2002/32**

(73) Proprietor: **Schott Glass Technologies Inc.**
**Duryea**
**Pennsylvania 18642-2036 (US)**

(72) Inventors:
• **CONZONE, Samuel, D.**
**Clarks Summit, PA 14811 (US)**
• **HAYDEN, Joseph, S.**
**Clarks Summit, PA 18411 (US)**
• **MARKER, Alexander, J., III**
**Moscow, PA 18444 (US)**
• **WALTHER, Marten**
**31061 Alfeld (DE)**
• **LIEBALD, Rainer**
**64569 Neuheim (DE)**
• **BEER, Ulrike**
**55127 Mainz (DE)**
• **PEUCHERT, Ulrich**
**55294 Bodenheim (DE)**
• **SPRENGARD, Rüdiger**
**55129 Mainz (DE)**
• **KÄLBER, Tobias**
**55116 Mainz (DE)**

(74) Representative: **Herden, Andreas F.**
**Blumbach - Zinngrebe**
**PatentConsult**
**Patentanwälte**
**Alexandrastrasse 5**
**65187 Wiesbaden (DE)**

(56) References cited:
EP-A- 0 492 577     EP-A- 0 775 674
EP-A- 0 858 976     EP-A- 0 867 985
DE-A- 19 731 075    GB-A- 909 679
GB-A- 1 000 796     GB-A- 1 060 393
GB-A- 1 107 121     US-A- 2 538 867
US-A- 3 997 700     US-A- 4 005 172
US-A- 4 229 220     US-A- 4 767 725
US-A- 5 334 559     US-A- 5 346 865
US-A- 5 763 340     US-A- 5 851 938
US-A- 6 075 625

• SEKA W ET AL: "HIGH-POWER PHOSPHATE-GLASS LASER SYSTEM: DESIGN AND PERFORMANCE CHARACTERISTICS" APPLIED OPTICS,US,OPTICAL SOCIETY OF AMERICA, WASHINGTON, vol. 19, no. 3, 1 February 1980 (1980-02-01), pages 409-419, XP000709071 ISSN: 0003-6935

**(Cont. next page)**

- **TACCHEO S ET AL: "WIDELY TUNABLE SINGLE-FREQUENCY ERBIUM-YTTERBIUM PHOSPHATE GLASS LASER" APPLIED PHYSICS LETTERS, AMERICAN INSTITUTE OF PHYSICS. NEW YORK, US, vol. 68, no. 19, 6 May 1996 (1996-05-06), pages 2621-2623, XP000588305 ISSN: 0003-6951**

- **GOLDBERG L S ET AL: "REPETITIVELY PULSED MODE-LOCKED ND:PHOSPHATE GLASS LASER OSCILLATOR-AMPLIFIER SYSTEM" APPLIED OPTICS, US, OPTICAL SOCIETY OF AMERICA, WASHINGTON, vol. 21, no. 8, 15 April 1982 (1982-04-15), pages 1474-1477, XP000709169 ISSN: 0003-6935**

**Description**

This application is a continuation-in-part of Serial No. 09/430,885, filed November 1, 1999.

SUMMARY OF THE INVENTION

This invention has two aspects: a first aspect relating to the joining of two phosphate glass materials, and a second aspect relating to the joining of two materials which are each independently a glass, metal layer or crystalline material; wherein preferably at least one material joined is not a phosphate glass.

Phosphate Glass Aspect

In the first aspect, the present invention relates to a process and method for the joining of phosphate glass, using a solution at low, e.g. room temperature or temperatures below the glass transition point of the glasses to be joined. The present invention also relates to joined phosphate glasses, a solution for the bonding of phosphate glasses, and methods of employing joined phosphate glass (e.g. hybid or similar glass joints) in photonic applications, especially in laser and related applications.

Bonded glass is well known in the manufacture of various light transmitters, refractors, reflectors, and the like. Optical clarity, e.g. low loss at the bonded zone, is of high importance in various applications and various high temperature methods to obtain as high a quality joint as possible are known. High performance instruments or devices, especially optical devices, require a quality bonded joint to prevent optical loss.

For a bond's quality to be ascertained, factors such as the precision of the bond, the bond's mechanical strength, the bond's optical, thermal, and chemical properties, as well as the simplicity of the bonding process are considered.

This aspect of the present application relates to a glass composite formed from a first phosphate glass surface and a second phosphate glass surface, the composite having in between and in contact with each surface, a phosphorous-containing solution. In a preferred embodiment, the composite is formed from a first and second phosphate glass interface having in between and in contact with said interface a layer of cured phosphorus-containing aqueous solution. In yet another embodiment, the layer is a condensed phosphorus phase (e.g. a $(P-O-P)_n$ layer). The composites according to the present invention are preferably prepared by joining two phosphate glass substrates together by curing there between a phosphorus-containing aqueous solution. The method according to the present invention includes bonding two phosphate glass surfaces by curing there between a phosphorus-containing aqueous solution. Hybrid glass joints according to the present invention find use in photonic devices including a phosphate glass component therein, such as laser sources, lossless splitters, etc.

A phosphate glass as used within this application means a glass where $P_2O_5$ is the primary glass forming component present, although other glass forming components $SiO_2$, $GeO_2$, $P_2O_3$ or conventional modifiers (e.g. $Na_2O$, $K_2O$) and intermediates (e.g. $Al_2O_3$) may be present in lesser quantity.

A phosphorous-containing solution as used within this application is to be construed as broadly encompassing suitable soluble phosphorous, e.g. phosphates, phosphites, and related phosphorous-containing species.

An object of the first aspect of the present invention is to provide a method for joining glass components at low temperature using a solution based technology.

An additional object of this aspect of the invention is to provide enhanced structured phosphate glass composites without heat related defects (e.g. surface crystallization or warping).

An additional object of this aspect of the invention is to provide an optically transparent phosphate glass composite.

An additional object of this aspect of the invention is to provide an aqueous, phosphorus-containing solution as an adhesive for preparing mechanically strong and optically transparent joints between phosphate glasses.

An additional object of this aspect of the invention is to provide improved hybrid photonic devices where active (lasing) phosphate glasses are joined to other active or passive (non-lasing) phosphate glasses.

An additional object of this aspect of the invention is to provide acidic or basic phosphorus-containing solutions as adhesives for phosphate glass joining.

An additional object of this aspect of the invention is to provide a method whereby an aqueous phosphorus-containing solution is used to form an optically transparent and mechanically strong joint between phosphate glasses at low temperature - below the lowest glass transition temperature of the two glasses being joined.

An additional object of this aspect of the present invention is to provide a method to form hybrid photonic devices , which contain various phosphate glass components joined in such a way that they are optically transparent.

A further object of this aspect of the instant invention is to provide a method for joining phosphate glasses joined at room temperature by dissolution and condensation reactions.

A further object of this aspect of the instant invention is to provide a composite glass with minimal defects caused by differences in the coefficient of thermal expansion of the components since they are joined at low temperatures.

A further object of this aspect of the instant invention is to provide a process for the preparation of composite phosphate glass wherein the glass does not necessarily have to be ramped or quenched through any temperature range to form a rigid joint.

An additional object of this aspect of the present invention is to provide a joining adhesive solution (e.g. the phosphorus-containing solution used to join the phosphate glasses) which is chemically similar to the glass.

A further object of this aspect of the instant invention is to provide a phosphate glass to phosphate glass interface with low turbidity, and a transparent interface.

An additional object of this aspect of the instant invention is to provide a composite glass joint which is optically transparent at the wavelengths commonly used for photonic systems utilizing wavelengths from 800 to 2500 nm.

An additional object of this aspect of the instant invention is to provide a joined or bonded phosphate glass joint which is made at low (e.g. room) temperature and has sufficient mechanical strength to survive oil-based cutting, grinding and polishing.

An additional object of this aspect of the instant invention is to provide a joined or bonded phosphate glass joint which is made at low (e.g. 25°C) temperature and has sufficient mechanical strength to survive water-based cutting, grinding and polishing after a heat treatment.

Finally, an additional object of this aspect of the present invention is to provide a phosphate glass surface joint with no appreciable strain or birefringence around the interface.

Other objects, features, and characteristics of the present invention as well as the methods of use of related elements will become more apparent upon consideration of the following description and the appended claims with reference to the accompanying drawings, wherein like reference numbers designate corresponding elements in the various figures.

In one embodiment of the first aspect, a phosphorus-containing solution is sandwiched between two phosphate glasses at low temperature, thereby forming a joint or bond between the phosphate glasses. Preferably this is achieved at room temperature, or at a temperature below the glass transition temperature. Such a joint provides a strong, optically transparent joint.

A joined glass according to a preferred embodiment of the present invention comprises one which appears optically transparent, is strong enough that it cannot be broken by hand, and is not fractured when a component piece is cut from the formed template (oil or water based cutting) and finished (e.g by grinding and polishing). Component pieces may be thin slices on the order of 2mm thick from a much larger hybrid glass preform.

A joined glass according to another preferred embodiment of the present invention comprises one which appears optically transparent, is strong enough that it cannot be broken by hand, and, after heat treatment or vacuum dessication is not fractured after water based cutting, grinding and polishing.

To prepare a composite glass according to the present invention, appropriate substrate glasses are first obtained. Such glasses may be prepared by any method whatsoever, traditional glass forming techniques generally sufficing, e.g. batching and fusing raw materials, then quenching the melt to form a homogeneous glass. Such techniques are well known in the art.

Any "phosphate" glass can be joined by the invention. Generally, such glasses include any which contain at least about 20 mol % ($P_2O_5$ basis), preferably at least about 30-75 mol %, and most preferably at least about 35-68%. Up to about 80 mol % can be used, but preferably less than about 75 mol %, most preferably less than or equal to about 68 mol %. Essentially any other conventional component in phosphate glasses can also be contained in conventional amounts. Several such compositions are illustrated by way of example in Table 1 which follows.

Such glasses are very well known, e.g. from US Patents 4,075,120, 4,108,673, 4,239,645, 4,248,732, 4,406,681, 4,661,284, 4,770,811, 4,820,662, 4,929,387, 5,032,315, 5,039,631, 5,334,559 and 5,491,708, 5,508,235, 5,526,389, and from the literature - Inorganic Glass-Forming Systems, N.J. Kreidl Glass Science and Technology, Volume 1 p. 107 et seq., Spectroscopic Properties of Nd3+ Dopant Ions in Phosphate Laser Glasses, S.A. Payne et al. Ceramic Transactions - Solid State Optical Materials, 1992 Volume 28 p. 253 et seq., Thermal-Mechanical and Physical-Chemical Properties of Phosphate Laser Glasses, M.L. Elder et al., Ceramic Transactions - Solid State Optical Materials, 1992 Volume 28 p. 261, Effect of Phosphate Glass Composition on the Rate of Platinum Dissolution, Ceramic Transactions - Solid State Optical Materials, 1992 Volume 28 p. 283 et seq., each of which is incorporated by reference as if fully set forth in this application.

Particularly preferred compositional spaces are shown in Table 1.

**Table 1. Compositional Space for Phosphate Glass**

| Oxide Component | Mol % Range | Mol % Range Preferred | Mol % Range Particularly Preferred |
|:---:|:---:|:---:|:---:|
| $SiO_2$ | 0-20 | 0-15 | 0-12 |

(continued)

| Oxide Component | Mol % Range | Mol % Range Preferred | Mol % Range Particularly Preferred |
|---|---|---|---|
| $P_2O_5$ | 25-80 | 30-75 | 35-68 |
| $B_2O_3$ | 0-20 | 0-15 | 0-12 |
| $Al_2O_3$ | 2-20 | 3-15 | 4-15 |
| $Re_2O_3$ | 0-15 | 0-12 | 0-10 |
| $La_2O_3$ | 0-15 | 0-12 | 0-10 |
| $Li_2O$ | 0-40 | 0-38 | 0-35 |
| $Na_2O$ | 0-40 | 0-38 | 0-35 |
| $K_2O$ | 0-40 | 0-38 | 0-35 |
| $Rb_2O$ | 0-40 | 0-38 | 0-35 |
| $Os_2O$ | 0-40 | 0-38 | 0-35 |
| $Ag_2O$ | 0-30 | 0-28 | 0-25 |
| $MgO$ | 0-40 | 0-35 | 0-30 |
| $CaO$ | 0-40 | 0-35 | 0-30 |
| $SrO$ | 0-40 | 0-35 | 0-30 |
| $BaO$ | 0-40 | 0-35 | 0-30 |
| $ZnO$ | 0-40 | 0-35 | 0-30 |
| $TiO_2$ | 0-3 | 0-3 | 0-3 |
| $ZrO_2$ | 0-3 | 0-3 | 0-3 |
| $SnO_2$ | 0-3 | 0-3 | 0-3 |
| $Nb_2O_5$ | 0-20 | 0-15 | 0-10 |
| $Ta_2O_3$ | 0-7 | 0-7 | 0-7 |
| $Y_2O_3$ | 0-15 | 0-10 | 0-7 |
| $Ce_2O_3$ | 0-15 | 0-12 | 0-10 |
| $Pr_2O_3$ | 0-15 | 0-12 | 0-10 |
| $Nd_2O_3$ | 0-15 | 0-12 | 0-10 |
| $Sm_2O_3$ | 0-15 | 0-12 | 0-10 |
| $Eu_2O_3$ | 0-15 | 0-12 | 0-10 |
| $Gd_2O_3$ | 0-15 | 0-12 | 0-10 |
| $Tb_2O_3$ | 0-15 | 0-12 | 0-10 |
| $Dy_2O_3$ | 0-15 | 0-12 | 0-10 |
| $Er_2O_3$ | 0-15 | 0-12 | 0-10 |
| $FeO$ | 0-10 | 0-8 | 0-5 |
| $CoO$ | 0-10 | 0-8 | 0-5 |
| $NiO$ | 0-10 | 0-8 | 0-5 |
| $CuO$ | 0-5 | 0-4 | 0-3 |
| $MnO_2$ | 0-3 | 0-3 | 0-3 |
| $V_2O_5$ | 0-5 | 0-5 | 0-5 |
| $Cr_2O_3$ | 0-0.3 | 0-0.2 | 0-0.15 |

(continued)

| Oxide Component | Mol % Range | Mol % Range Preferred | Mol % Range Particularly Preferred |
|---|---|---|---|
| $As_2O_3$ | 0-5 | 0-5 | 0-5 |
| $Sb_2O_3$ | 0-5 | 0-5 | 0-5 |

The glasses can be of the same or different compositions. It is preferred that both glasses be phosphate glass, but bonds may be made with other glasses and ceramics if the conditions and solutions are chosen correctly. Substrate shapes are not critical. However, flat surfaces with minimal surface figures are preferred. Substrate thicknesses are also not critical. Similarly, joined surface area is not critical, although the configuration should be chosen with care such that the exit path for the aqueous portion of the solution is minimized, leading to better dehydration of the joint during curing. For example, samples of preferably annealed glass can be prepared into discs (e.g. 25 mm in diameter by 5mm thick) which are then preferentially ground and polished on the one side of each sample intended for joining.

Also by way of non-limiting example, discs of both active (lasing) and passive (non-lasing) IOG-1 phosphate laser glasses (commercially available glasses procurable from Schott Glass Technologies, Duryea, PA18642) are obtained. Such glasses are prepared following the basic disclosure of commonly assigned US Patent No. 5,334,559, which is incorporated herein in its entirety.

The glasses are then joined at room temperature using a phosphorus-containing solution as the liquid joining agent according to the method more completely described hereinafter and by way of the non-limiting examples.

The surface intended for joining is preferably prepared with a good surface figure, e.g. less than 500 nm (peak to valley), preferably equal to or less than 200 nm (peak to valley). Larger surface figures may be acceptable when the end use application is appropriate, e.g. the larger the surface figure typically the less strong, chemically durable, and transparent the bond is likely to be. The surface should also have a good polish to it, e.g. an inspection-quality transparent polish.

The joining surfaces are preferably cleaned prior to joining, where bond strength and/or optical transparency are important, as is usual. Various aqueous and non-aqueous solutions may be used to remove hydrocarbon and/or particulate debris. The following solutions are suitable for such cleaning, e.g. ethanol, methanol, potassium hydroxide solution, Micro™ cleaning solution (available from Cole Palmer Instrument Co, Vernon Hills, IL 60061), deionized water, Branson GP ultrasonic cleaning solution (available from Branson, Danbury Connecticut 06810), among many others.

Each joining surface should be preferably cleaned for a time period ranging from 1 to 60 min, more preferably at least 30 minutes or whatever time suffices routinely for external cleaning. Cleaning may be conducted by immersing the glass into one of the aforementioned cleaning solutions, and agitating the solution with a Branson 3200 ultrasonic cleaner (also available from Branson, Danbury, Connecticut 06810).

The standard cleaning regimen utilized in each of the examples of this application comprises the following steps:

- rinse the component in deionized water
- place the component in Micro™ solution in an ultrasonic cleaner for 20 minutes
- rinse the component with deionized water
- place in 3.0 M KoH solution for 30 seconds (varies depending on chemical durability of the glass)
- rinse with deionized water
- rinse with ethanol
- rinse with methanol
- dry with ultra high purity nitrogen gas
- remove particles with $CO_2$ snow gun.

After the final cleaning stage, the samples are preferably stored in a dust free environment (beneath a clean glass enclosure or preferably a clean room environment) and allowed to dry. A clean room or laminar flow hood is recommended to prevent foreign material depositing upon the surfaces to be joined.

Once the joining surfaces are clean and dry, phosphorus-containing solution should be applied to one or both of the joining surfaces. In general terms, for applying manually, application quantity should be in the range of 0.1 to 1000 microliters per square centimeter, 0.1 to 2.0 microliters per square centimeter is preferred. If dip-coating is the chosen application method, the remaining solution will depend on the viscosity and surface tension of the liquid and the pressure applied to the components during joining. It is preferred to minimize the amount of solution used while still adequately covering the joint, thereby reducing curing time and joint thickness.

The phosphorus-containing solution is preferably aqueous-based and is preferably prepared by mixing one or more soluble phosphorus containing raw materials with preferably deionized water, such that the $P_2O_5$ content (calculated) in solution is effective to join the surfaces according to the invention. Typically, about 0.1 to 85 weight % ($P_2O_5$)

can be used, preferably less than or equal to 30 weight %,more preferably less than or equal to about 20 weight %. Most preferably the amount is about from 10 to 20 weight %.

The phosphorus-containing solution can be acidic (pH<7.0), neutral (pH=7.0) or basic (pH>7.0) depending on which raw material and any other component which is used to prepare the solution. In a preferred embodiment, the solution is acidic, utilizing dilute phosphoric acid.

Furthermore, the solution in another embodiment is basic and can contain alkali and/or alkaline earth elements - e.g. where sodium phosphate glasses were to be joined, one would preferably use a soluble sodium phosphate salt. This would mimic the composition of the glass to provide a better interface. Colloidal $Al_2O_3$ may be added to more closely match the glass composition and to provide a more durable joint. Generally, any component compatible with the glass substrate can be added to the phosphorus-containing solution.

Other components may be added to enhance solubility of the components of the solution, e.g. hydrochloric acid or the like to ensure a more dissolved solution.

Table 2 lists one general composition of the phosphorus-containing solution suitable for use for joining phosphate glasses at room temperature.

Table 2. - Preferred Compositional Space for the Phosphorus-Containing System

| Oxide Component | Weight % | Preferred Weight % | Particularly Preferred Weight % |
|---|---|---|---|
| $H_2O$ | 15-99.9 | 50-90 | 70-90 |
| $P_2O_5$ | 0.1-85 | 5-35 | 10-30 |
| $Al_2O_3$ | 0-10 | 0-5 | 0 |
| $Li_2O$ | 0-15 | 0 | 0 |
| $Na_2O$ | 0-20 | 1-20 | 1-20 |
| $K_2O$ | 0-25 | 1-20 | 0 |
| MgO | 0-10 | 0 | 0 |
| CaO | 0-10 | 0 | 0 |
| BaO | 0-10 | 0 | 0 |
| SrO | 0-10 | 0 | 0 |
| $SiO_2$ | 0-27 | 0-15 | 0-8 |

Typical raw materials used to prepare phosphorus-containing solutions include deionized water, NaOH, HCl, 85 weight % phosphoric acid, $P_2O_5$, hydrated or anhydrous alkali phosphate salts (i.e., $K_2HPO_4$, $KH_2PO_4$, $KPO_3$, $Na_2HPO_4$, $LiPO_3$, colloidal $Al_2O_3$ suspension), salts of the mentioned compounds, and other suitable similar phosphorus containing substances that are soluble in the solution, and all are generally commercially available.

The phosphorus-containing solution should preferably be applied onto the joining surface using a pipette or by dip coating. However, any method commonly used to dispense liquid could be employed for this step in the joining process, e.g. aerosol dispensing, pouring, dispersing, spraying under water, joining in a bath of phosphorous-containing solution, etc.

The joining surfaces on two separate discs or other shaped surfaces are then brought into contact to sandwich the phosphorus containing solution between the bonding surfaces. Upon contact, the solution should spread across each of the glass surfaces and form a homogeneous interlayer. If bubbles form, they may be removed by the application of a vacuum.

After the liquid interlayer is formed, the joint assembly "cures" and hardens, typically for 3 to 7 days at room temperature (22-27°C). If a heat treatment is applied, the joint may cure for as little as three days or less, but the minimum time should allow the majority of water to evaporate prior to heat treatment. The joint assembly may, if desired, be placed under an external compressive force and/or vacuum to accelerate the joining process and/or to promote good joining in situations where thin sheets or lightweight glass pieces are being joined. To accelerate curing, higher temperatures can be used if desired, up to less than the glass transition temperature of the lowest glass transition temperature component of the joint. A rigid joint is usually formed after 3 to 7 days of curing, longer periods of time may be used to further set the joint.

After sufficient room temperature curing, the joint should be strong enough to be subjected to oil based cutting, grinding and polishing without fracture. The joint in another embodiment after curing may be subjected to an additional heat treatment at a temperature below the glass transition temperature of the particular phosphate glass, e.g. typically ranging from 50° C to 500° C. The heat treatment further strengthens and cures the joint, enabling it to be cut and polished in aqueous environments without failure at the joint interface.

In another embodiment, the joined glass may be heated to a temperature above the glass transition point of the glasses being joined, but this is not necessary to obtain the benefits of the invention.

Temperatures commensurate with those utilized in post processing are particularly preferred. A preferred heat treatment is between 350° C and 400° C, particularly preferred is 375° C, especially when further processing of the hybrid substrate requires an ion exchange treatment in , e.g., a $KNO_3$ bath. Ion exchange in a $KNO_3$ bath is usually conducted at or about 375° C. It is preferred that the lowest possible temperature be used during heat treatment to minimize residual stress and birefringence at the joint interface caused by the difference in the coefficient of thermal expansion of the two glasses (if applicable). For reduction of thermal stresses, a room temperature cure is preferred if the standard operating temperature of the finished device is to be room temperature and if sufficient strength and optical performance is realized without heat treatment.

In a preferred method of fabricating photonic devices, the novel method of joining phosphate glasses is used to provide a hybrid glass preform. This preform is then further processed into thin sections or other shapes for the ultimate end use in a photonic device. Ideally the performance of the photonic device is improved by use of the hybrid glass over a monolithic glass. The template can be of any shape or size (as determined by the specific application).

The typical thickness of the joint interface is usually dependant on the starting surface figure of the joining surfaces i.e., materials with poor surface figure or with surface irregularities will have a thicker joint interfaces, while conversely those with good surface figure will have thinner joint interfaces. In general, the flatter the surface before joining, and thinner the resulting joint, the better the optical quality. Thus, for many optical applications a joint with an interface thickness of <500 nm is preferred. Such a joint can be formed between two polished joining surfaces, if those surfaces had a surface figure of -200 nm (peak to valley) prior to joining. However, any joint thickness suitable for a given application is included.

Turning now to a more detailed nonlimiting theoretical discussion of the first aspect of the invention, it is noted that an aqueous phosphorus-containing solution can be used to form an optically transparent and mechanically strong joint between phosphate glasses at room temperature and/or by following the room temperature cure with an appropriate heat treatment. Hybrid photonic devices may be formed by the present method, the devices containing sections of phosphate glass with variable compositions can be joined in such a way that they are optically transparent.

As discussed above, two or more chemically similar or chemically distinct phosphate glasses within the general compositional space outlined in Table I may be finely ground or polished on at least one surface. Other glasses or optical components also may be used, but phosphate glass is preferred. Each ground or polished surface is then cleaned sufficiently to remove hydrocarbon contamination and/or particulate debris and to prepare two clean, hydrophilic surfaces, which can be joined through glass dissolution and condensation reactions, as described below.

Once the two joining surfaces are cleaned, a small volume of phosphorus-containing solution (of the general composition shown in Table II, with any appropriate combination of the listed or other components) is applied to the surface of one or both of the glasses. The two joining surfaces are then brought into contact and maintained there, such that the phosphorus-containing solution is sandwiched between the two glasses, until the joint is formed.

Although the applicants believe what follows to be the mechanism through which the bonding process occurs, they offer the explanations contained herein by way of theoretical explanation and do not wish to be bound by the theory.

Dissolution reactions are believed to ensue once the solution comes into contact with the two glass surfaces, since phosphate glasses, e.g., with the general composition listed in Table I, are soluble in aqueous solution, especially when the pH is greater than or less than 7. As the glass begins to dissolve, the concentration of phosphorus species (i.e., $PO_4^{3-}$, $HPO_4^{2-}$, $H_2PO_4^-$, and $H_3PO_4$) in the interfacial region begins to increase.

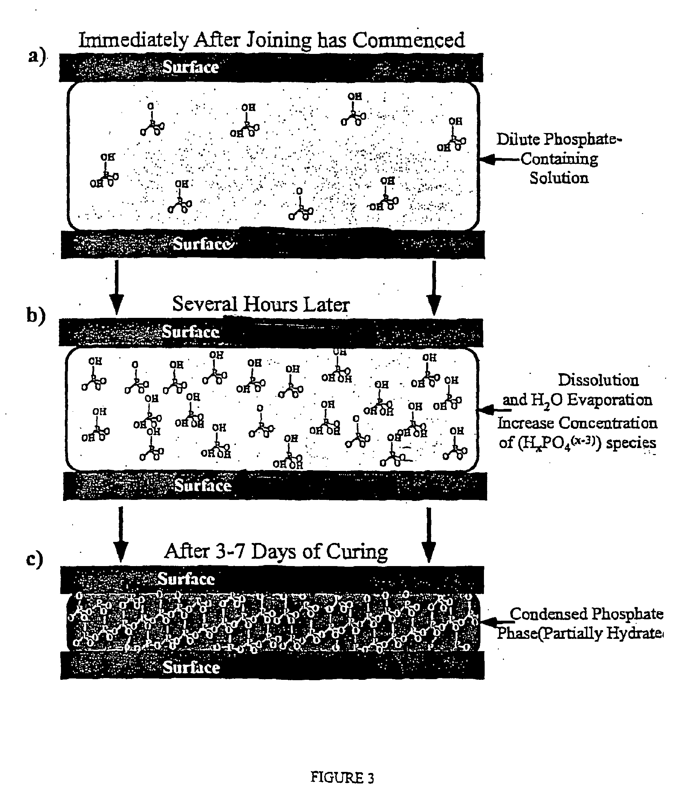

Figure 3 illustrates a theoretical reaction mechanism whereby the inventive novel joint is formed. Turning to the phase labeled "a" it may be seen that when the concentration of phosphorus species in the phosphorus-containing joining solution is low, it is believed that the majority exist as $H_xPO_4^{(x-3)}$ monomers (i.e. in the dilute phase, e.g. of phosphoric acid or the like, when mixed with the appropriate preferably aqueous carrier).

However, it is believed that as the concentration of phosphorus species is increased as seen in phase "b" (from glass dissolution and evaporation of $H_2O$ from the interfacial region), condensation reactions convert the $H_xPO_4^{(x-3)}$ monomers into - P-O-P-O-P- chains, as illustrated in the phase marked with reference "b". A rigid, condensed phosphate phase is formed at the interface, as illustrated in the phase marked "c", once the P-O-P cross-linking proliferates to the two glass surfaces. The (P-O-P)n cross linking can occur over wide approximate values of n, e.g. high values of 1,000,000, 500,000, and low values of 2, 10, 100, and 1000.

This condensed phosphate interface is responsible for the chemical bonding at the joint interface. The rigidity of the condensed phosphorus phase (and consequently the strength of the joint) is enhanced during the curing as $H_2O$ evaporates from the interface or diffuses into the adjacent glass surfaces, and the cross-linking within the interfacial region is increased.

The phosphate glass joints formed by this novel process are considered rigid because they are not plastically deformed or fractured when subjected to oil-based cutting, grinding and polishing. However, excessive amounts of residual water remaining in the condensed phosphorus could result in a semi-rigid joint that could undergo plastic deformation.

A semi-rigid joint can be avoided by utilizing longer curing times, application of a vacuum, and/or by subjecting the joint to a post-curing heat treatment at a temperature >25°C, but below the glass transition temperature of the glass in the joint having the lowest glass transition temperature. A suitable range is from about 70° to about 550°C, preferably from about 200° C to about 500° C, more preferably from about 300°C to about 400° C. A particularly preferred heat treatment is at a temperature of about 375° C. However, any suitable temperature consistent with being below the glass transition temperature of the components of the hybrid or joined same-type glasses may be used. It is preferred to heat treat at a temperature consistent with any post-processing of the optical components, as in ion exchange or other processing, which occurs at higher temperatures (e.g. about 375° C).

The instant inventive joined glass finds many uses, especially where a low-loss joint is essential. By way of example, joined phosphate glasses according to the instant invention are suitable as substrates for multiple wavelength arrays.

For example, a phosphorus-containing solution can be used to join an active phosphate laser glass (i.e., a glass with the general composition in Table I that contains >0.05 wt% of a rare earth oxide, other than $La_2O_3$) with a passive glass (i.e. a glass with the general composition in Table I, where $La_2O_3$ is the only rare earth oxide incorporated into the glass or no rare earth or lasing ions are included at all).

Such substrates are additionally suitable for use in the fabrication of multiple-wavelength arrays for telecommunication sources and measurement tools for optical fiber systems by virtue of their extremely low loss characteristics and multiple wavelengths.

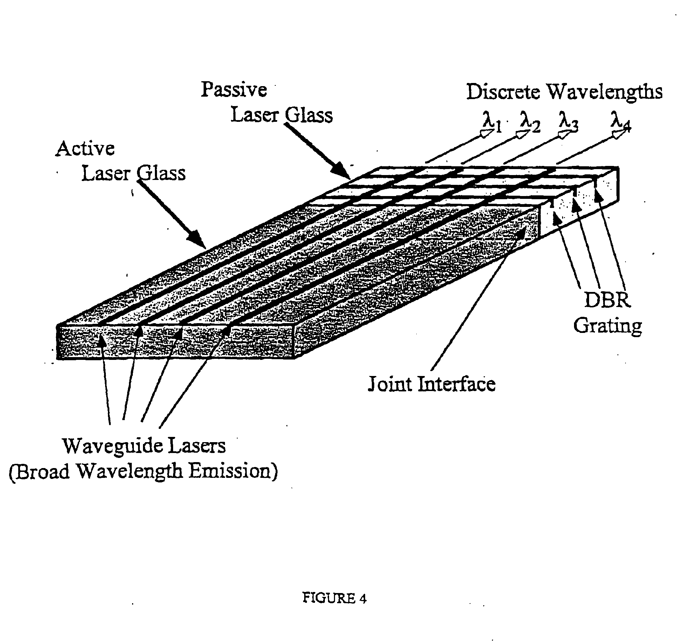

A pictorial representation of a multiple wavelength array that could be fabricated from a hybrid glass substrate is shown in Figure 4. The active portion of the substrate acts as a broad-band laser, and the passive portion acts as a distributed-Bragg-reflector (DBR) grating, which allows for wavelength selectivity. Preferred wavelengths which can be emitted are in the 1540 nm and 1300 nm telecom windows.

In another preferred use, a laser source fabricated using the inventive joint can also be designed to simultaneously produce the multiple wavelengths necessary for dense wave division multiplexing (DWDM) systems and components operable at telecommunications wavelengths, e.g. the 1540 and 1300 nm telecom windows. In this arrangement, one laser may produce several wavelengths.

These and other uses of the novel joined glasses are now possible in telecommunications (e.g fiber optic, laser, optical networking, etc) applications and one skilled in the art may now realize other uses while having regard for this disclosure. Some exemplary networks and uses are described in Opticl Fiber Telecommunications II, S.E. Miller et al., Academic Press, Inc., London (1988); Multiwavelength Optical Networks, T.F. Stern et al., Addison Wesley Longman, Inc., Reading, Mass. USA (1999); and Fundamentals of Photonics, B.E.A. Salch et al., John Wiley & Sons, Inc., New York, NY, USA (1991).

Furthermore, the novel joining or bonding method can be used to prepare joints in an economical manner between active and passive phosphate laser glass which provides sufficient mechanical strength, low loss (<0.01 dB) and minimal birefringence at the interface. The novel low temperature joining process is very cost effective because one large hybrid glass preform can now be sectioned by oil-based or water-based cutting, grinding and polishing to prepare a multitude of substrates for use in photonic devices (e.g. multiple wavelength arrays) simply by cutting appropriate sizes from the preform.

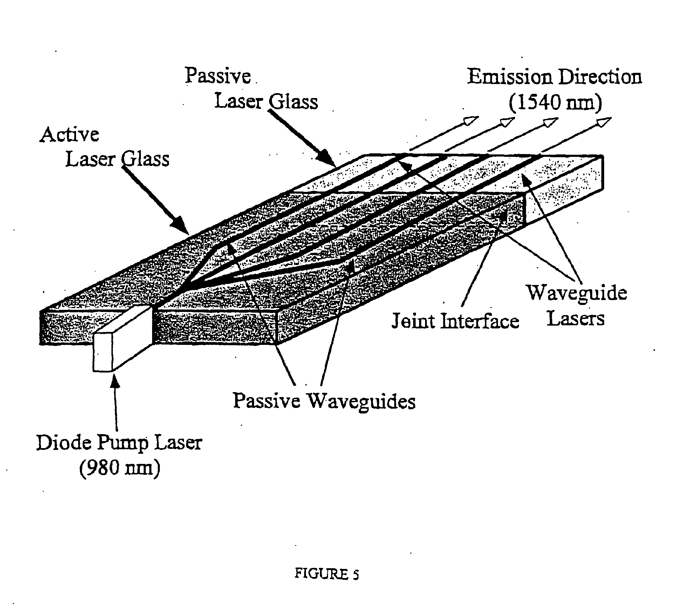

The novel joined composition now makes it possible to manufacture substrates for multiple waveguide lasers, all of which can be pumped by a single source. An active phosphate laser glass is joined to a passive phosphate laser glass in the novel manner according to the instant invention. Turning now to figure 5, the waveguide design illustrated there can be "written" onto the substrate (e.g. by ion exchange, metal diffusion, proton diffusion, or other suitable techniques) such that a single source of pump light focused onto the passive laser glass section could be guided to several waveguide lasers in the active section. This novel design allows multiple waveguide lasers within the active portion to be pumped simultaneously by a single source. A significant benefit accruing to this design is that the pumping light would not suffer appreciable absorption in the passive glass as it would in the active glass, since the passive phosphate glass is transparent at 980 nm (the wavelength typically used to pump an active Er/Yb doped phosphate laser glass).

This novel joining method provides a cost-effective method of preparing large hybrid glass substrates, having good mechanical strength, low loss (<0.01 dB) and minimal birefringence with ease of customization to a particular end use.

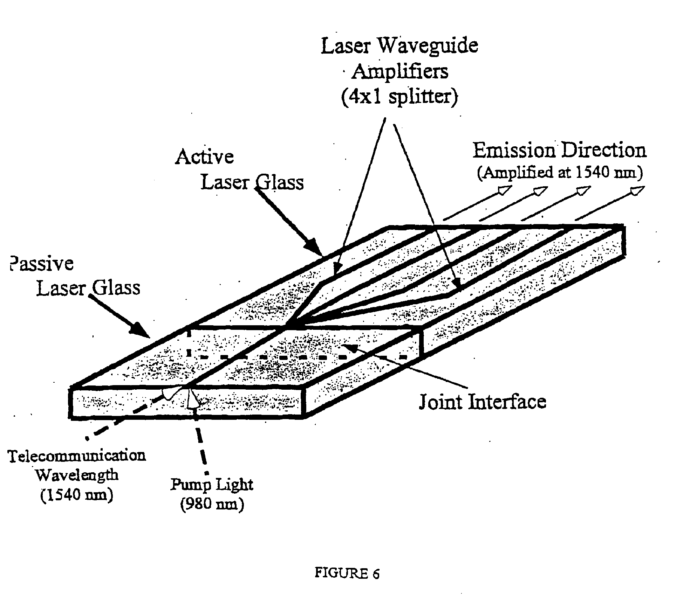

The novel joined glasses also can function as substrates for lossless splitters. In this embodiment, an active phosphate laser glass is joined to a passive phosphate laser glass using the low temperature phosphate joining method. Digital photonic information carried within a single waveguide in the passive section is then split into several waveguides in the active section. Again, preferred wavelengths for this include about 1300 nm and 1540 nm. A pump laser is used to amplify the signal in the active section, as seen in Figure 6, which illustrates an exemplary 4X1 lossless splitter, where the laser waveguide amplifiers are pumped in the longitudinal direction. The novel invention described herein provides for the nearly lossless splitting of broadband digital and cable television (CATV) information in the passive section. The final design of such splitting devices may differ from this exemplary embodiment.

Novel hybrid joints according to the instant invention also are suitable as substrates for self-cooling laser sources. In such laser sources according to the instant invention, successive sections of active and passive phosphate laser glass are joined by the low temperature phosphate glass bonding. These composites form a hybrid laser where the active sections participate in light amplification, and the passive sections transmit the light without amplification and provide a sufficient volume of non-lasing material for "self-cooling." This self-cooling system reduces thermal noise when a phosphate laser glass is used for high power applications. The laser is constructed utilizing the novel cost-effective method of preparing large hybrid glass substrates with good mechanical strength, low loss (about 0.01 dB at each interface) and minimal birefringence associated with room temperature phosphorus solution joining.

The present invention also contemplates a general hybrid photonic device where substrates composed of active to active, active to passive and passive to passive phosphate glass junctions provide enhanced performance over a monolithic system. The hybrid substrate formed according to the instant invention has suitable mechanical strength - such that it can be machined, ground and polished without fracture.

The hybrid device is a good transmitter of light at useful wavelengths for data intensive applications (i.e. good transmittance at 1300 or 1540 nm is provided for fiber optic telecommunication systems, but also has excellent transmittance between 800 - 2500 nm wavelengths). Finally, the interface between different sections of glass has minimal birefringence to minimize any loss of intensity or change in the polarization of light as it travels from one section of glass into another.

It should be noted that condensed phosphates, like the phase formed at the interface after room temperature curing of the phosphorus-containing solution, are hygroscopic. Thus, for removal of all of the residual water from the interface of a joint, moderate heat treatment or vacuum desiccation is preferred. In a preferred embodiment discussed above, the joint may be heat treated at a temperature >25°C, to optimize mechanical strength, chemical durability, transmission, and machinability.

In yet another preferred embodiment of this aspect of the invention, the joined glass in this foregoing application is at some point in time after the joint is finally cured and/or heat treated supplied with a waveguide, e.g. one which is ion exchanged onto the surface of the glass prior to use in any photonic device. The ion exchange process is typically conducted in a $KNO_3$ salt bath at 375°C, and the glass is slowly heated up to this temperature before waveguides are "written" onto the glass. This slow heating helps to avoid thermally shocking the high expansion phosphate glass and can be used as an addition to the curing process.

In yet another preferred embodiment of this aspect of the invention, because of the hygroscopic nature of the interface, the joined non-heat-treated substrates are thereafter machined, ground and polished with an oil based lubricant. Furthermore, the resulting non-heat treated joint is preferably protected from the atmosphere with a thin layer of hydrophobic liquid, e.g. an oil or organic hydrophobic film.

Other, conventional aspects of the designs of these uses are commonly known and are disclosed in, e.g. Camy et al. in "Ion Exchanged Planar Lossless Splitter at 1.5 μm", Electronics Lett. 32 [4] 321 (1996) (which discloses a lossless splitter application; U.S. Patent 5,669,997 to Robbert et al. (bonded optical or semiconductor members); U.S. 5,053,251 and U.S. 5,143,275 to Hara et al. (repairing glass-lined equipment); U.S. 3,409,198 to Peterman (a bonding apparatus).

In yet another embodiment of this aspect of the invention, the phosphorus-containing solution may be applied to a single piece of phosphate glass to provide a phosphorus treated surface of phosphate glass. Such glass may then, if desired be polished or have the surface prepared in any of a number of known ways while obtaining the benefits of the instant invention.

Non-Phosphate Aspect

In a second aspect, the present invention relates to a process for the joining of a first substrate to a second substrate, each independently being a glass, metal layer or crystalline material, wherein both substrates are capable of being wet by an aqueous solution. Joining the substrates is effected using a solution at low, e.g. room temperature or temperatures below the glass transition point of a glass to be joined. The present invention also relates to joined substrates ("hybrids"), per se. The hybrids are useful in photonic applications, especially in laser and related applications.

Many different materials are often used to produce photonic devices, e.g., glasses, polymers, single crystals, and semiconductors (some of these being doped with other elements, for example rare earth elements). Such devices may consist of planar and/or fiber components. By joining dissimilar photonic materials together, one can approach the realization of devices thar are best described as photonic chips that integrate different tasks. One could envision that a hybrid photonic chip could be used to generate, modulate, guide, amplify, multiplex, and detect light for telecommunication applications. This could be made possible by joining materials that can generate (light sources, lasers), modulate (optically active crystals, LiNb0$_3$), guide (planar waveguides, fibers), amplify (rare earth doped waveguides and/or fibers), multiplex (coated glass substrates), and detect light (semiconductors) in different steps within a solid chip. For producing such an optical chip substrate, the materials are best joined directly with interfaces that do not attenuate light. Further, the joints should be mechanically robust. The interface has to be thin, with high transparency, and low loss. Joining the different materials into a single package has the obvious advantages of integrating multiple functionality within a single package.

Successful joints between two phosphate glasses have already been prepared by using aqueous solutions of a phosphate sol., as discussed in serial number 09/430,885 (which is herein incorporated by reference in its entirety), or silicate solutions, or silicate solutions, in serial number 09/597,157, by using sol-gel containing organic compounds (Coming US 5,991,493), by using a fusing process for glass (Coming US 5,926,599), or without using anything else other than hydrophilised surfaces (Matsushita US 5,785,874).

Thus, this aspect of the invention involves a glass composite formed from a first surface and a second surface, each independently being a glass, metal or crystalline material, the composite having in between and in contact with each surface, a phosphorous-containing solution. Both substrates must be capable of being wet by this phosphorous-containing solution. The composite is formed from a first and second substrate having in between and in contact with said interface a layer of cured phosphorus-containing aqueous solution. In one embodiment, the layer is a condensed phosphorus phase (e.g. a rigid (P-O-P)$_n$ layer). Where a glass substrate is used, it is preferably a multi-component oxide glass, a non-oxide glass, or a mixed oxide glass. A preferred single component oxide material is silica (SiO$_2$), optionally doped with conventional dopants which enhance the optical properties, e.g., germanium. Preferred multi-component oxide glasses include phosphate glass, as well as silicate, borate, germanate, telluride or aluminate glasses. Preferred non-oxide glasses are chalcogenide, fluoride, heavy metal flouride (e.g., ZBLAN®) or sulfide (e.g., As$_2$S$_3$) glass. A preferred mixed oxide/fluoride glass is a fluorophosphate glass.

Where a crystalline material is used it is preferably a single crystalline material, e.g., a non-semiconducting material such as LiNb0$_3$, a fluoride such as CaF$_2$ or LiF, a chloride such as NaCl or AgCl, an iodide such as KI, a bromide such as AgBr, or an oxide such as Sapphire (Al$_2$0$_3$). Alternatively, the single crystalline material may be a semiconducting material such as GaAs, InP, ZnS, ZnSe, ZnTe, Si or Ge.

The composites according to the present invention are preferably prepared by joining two substrates together by curing there between a phosphorus containing aqueous solution. The method according to the present invention includes bonding two surfaces by curing in between them a phosphorus-containing aqueous solution. Hybrid joints according to the present invention find use in photonic devices such as laser sources, lossless splitters, etc..

A "phosphate glass" as used within this application means a glass where P$_2$O$_5$ is the primary glass forming component present, although other glass forming components SiO$_2$, GeO$_2$, P$_2$O$_3$ or conventional modifiers (e.g. Na$_2$O, K$_2$O) and intermediates (e.g. Al$_2$O$_3$) may be present in lesser quantity. The other oxide and non-oxide glasses mentioned are similarly defined.

A phosphorous-containing solution as used within this application is to be construed as broadly encompassing suitable soluble phosphorous, e.g. phosphates, phosphites, and related phosphorous-containing species.

Thus, the invention provides a method for joining glass, metal and crystalline components at low temperature using a solution based technology. The invention also provides enhanced structured composites without heat related defects (e.g. surface crystallization or warping), and an optically transparent composite. Moreover, the invention provides an aqueous, phosphorus-containing solution as an adhesive for preparing mechanically strong and optically transparent joints between the above substrates. Devices based on these structured composites are disclosed in (Atty. Dkt. No. BKRAM-1 WO), filed November 1, 2000, which is herein incorporated by reference in its entirety.

The invention thus enables the production of improved hybrid photonic devices where, e.g., active (lasing) glasses are joined to other active or passive (non-lasing) glasses. For example, the method enables forming hybrid photonic devices , which contain various glass components, e.g., at least one phosphate glass, joined in such a way that they are optically transparent, and possess minimal defects caused by differences in the coefficient of thermal expansion of the components since they are joined at low temperatures.

The joined composites do not necessarily have to be ramped or quenched through any temperature range to form a rigid joint, although modest heating, as described below, may be desirable.

The composite joint is optically transparent at the wavelengths commonly used for photonic systems utilizing wavelengths from 800 to 2500 nm, has sufficient mechanical strength to survive oil-based or water-based cutting, grinding and polishing, after a heat treatment, and has no appreciable strain or birefringence around the interface.

In one embodiment, a phosphorus-containing solution is sandwiched between two substrates at low temperature, thereby forming a joint or bond between the substrates. Preferably this is achieved at room temperature, or at a temperature below the glass transition temperature of any substrate being joined (which is a glass). Such a process provides a strong, optically transparent joint.

A joined hybrid according to a preferred embodiment of the present invention comprises one which appears optically transparent, is strong enough that it cannot be broken by hand, and is not fractured when a component piece is cut from the formed hybrid (oil or water based cutting) and finished (e.g by grinding and polishing). Component pieces may be thin slices on the order of 2mm thick from a much larger hybrid preform.

A joined hybrid according to another preferred embodiment of the present invention comprises one which appears optically transparent, is strong enough that it cannot be broken by hand, and, after heat treatment or vacuum dessication is not fractured after water based cutting, grinding and polishing.

To prepare a hybrid according to the present invention, appropriate monoliths are first obtained. Such substrates may be prepared by any method whatsoever, traditional glass forming techniques generally sufficing, e.g. batching and fusing raw materials, then quenching the melt to form a homogeneous glass slab, which is then cut and polished to form substrates. Such techniques are well known in the art.

Generally, phosphate glasses include glasses which contain at least about 20 mol % ($P_2O_5$ basis), preferably at least about 30-75 mol %, and most preferably at least about 35-68%. Up to about 80 mol % can be used, but preferably less than about 75 mol %, most preferably less than or equal to about 68 mol %. Essentially any other conventional component in phosphate glasses can also be contained in conventional amounts. Several such compositions are illustrated by way of example in Table 1 which follows.

Such glasses are very well known, e.g. from US Patents 4,075,120, 4,108,673, 4,239,645, 4,248,732, 4,406,681, 4,661,284, 4,770,811, 4,820,662, 4,929,387, 5,032,315, 5,039,631, 5,334,559 and 5,491,708, 5,508,235, 5,526,389, and from the literature - Inorganic Glass-Forming Systems, N.J. Kreidl Glass Science and Technology, Volume 1 p. 107 et seq., Spectroscopic Properties of Nd3+ Dopant Ions in Phosphate Laser Glasses, S.A. Payne et al. Ceramic Transactions - Solid State Optical Materials, 1992 Volume 28 p. 253 et seq., Thermal-Mechanical and Physical-Chemical Properties of Phosphate Laser Glasses, M.L. Elder et al., Ceramic Transactions - Solid State Optical Materials, 1992 Volume 28 p. 261, Effect of Phosphate Glass Composition on the Rate of Platinum Dissolution, Ceramic Transactions - Solid State Optical Materials, 1992 Volume 28 p. 283 et seq., each of which is incorporated by reference as if fully set forth in this application.

Non-phosphate glasses such as those mentioned above, and in the tables below, can be prepared conventionally, by analogous techniques.

Crystalline materials (e.g., , $LiNbO_3$ and $CaF_2$) are commercially available materials and/or can be prepared by standard crystal growing techniques. By "metal" is meant a metallic coating applied to a surface e.g., a photonic component, by techniques such as CVD, sputtering, evaporation, sol-gel coating, etc. The surface could be, e.g., a polymer.

Particularly preferred compositional spaces are shown in Tables I-VI.

**Table I: Compositional Space for Phosphate Laser Glass**

| Oxide Component | Wt% |
|---|---|
| $P_2O_5$ | 55-75 |
| $Al_2O_3$ | 0-20 |
| $Re_2O_3$ | 0-15 |
| $La_2O_3$ | 0-15 |
| $Li_2O$ | 0-15 |
| $Na_2O$ | 0-15 |
| $K_2O$ | 0-15 |
| MgO | 0-15 |
| CaO | 0-15 |
| SrO | 0-15 |
| BaO | 0-15 |
| $As_2O_3$ | 0-3 |
| $Sb_2O_3$ | 0-3 |
| $Re_2O_3$ symbolizes any rare earth oxide besides $La_2O_3$ | |

**Table II. Compositional Space for Fluorophosphate Glass**

| Oxide Component | Wt% |
|---|---|
| $\frac{1}{2}P_2O_5$ | 5-30 |
| $AlF_3$ | 20-45 |
| $ReF_3$ | 0-8 |
| $LaF_3$ | 0.12 |
| LiF | 0-30 |
| NaF | 0-30 |
| KF | 0-30 |
| $MgF_2$ | 0-55 |
| $CaF_2$ | 0-55 |
| $SrF_2$ | 0-55 |
| $BaF_2$ | 0-55 |
| $As_2O_3$ | 0-3 |
| $Sb_2O_3$ | 0-3 |
| $Re_2O_3$ symbolizes any rare earth oxide | |

**Table III: Composition of Telluride Glass**

**Telluride Glass wt. -%** (sample joined already as disclosed in Section 7d)

TeO2 86,1
ZnO 11,7
Na2O 2,23

This glass can be additionally doped with various rare earth of other lasing ions.

**Table IV: Composition of Multicomponent Silicate Glass**

| Oxide Component | Wt% |
|---|---|
| $SiO_2$ | 50-80 |
| $Al_2O_3$ | 0-24 |
| $Re_2O_3$ | 0-15 |
| $La_2O_3$ | 0-15 |
| $B_2O_3$ | 0-18 |
| $R_2O$ R=Li, Na, K | 5-25 |
| $Li_2O$ | 0-25 |
| $Na_2O$ | 0-25 |
| $K_2O$ | 0-25 |
| MgO | 0-30 |
| CaO | 0-30 |
| SrO | 0-30 |
| BaO | 0-30 |
| ZnO | 0-30 |

(continued)

| Oxide Component | Wt% |
|---|---|
| $TiO_2$ | 0-3 |
| $As_2O_3$ | 0-3 |
| $Sb_2O_3$ | 0-3 |
| F- | 0-12 |
| $Re_2O_3$ symbolizes any rare earth oxide | |

**Table V: Composition of Chalcogenide Glass**
Chalcogenide
For example, AsS ~ 100%

**Table VI: Composition of ZBLAN Glass**
Fluoride ZBLAN <u>mol-%</u>
53 $ZrF_4$
20 $BaF_2$
4 $LaF_3$
3 $AlF_3$
20 NaF
0.75 $InF_3$

This glass can be additionally doped with various rare earth of other lasing ions.

The shape of the starting monolith is not critical. However, flat surfaces with minimal surface figures are preferred. Substrate thicknesses are also not critical. Similarly, joined surface area is not critical, although the configuration should be chosen with care such that the exit path for the aqueous portion of the solution is minimized, leading to better dehydration of the joint during curing. For example, monoliths can be prepared into discs (e.g. 25 mm in diameter by 5mm thick) which are then preferentially ground and polished on the one side of each sample intended for joining.

The surface intended for joining is preferably prepared with a good surface figure, e.g. less than 500 nm (peak to valley), preferably equal to or less than 200 nm (peak to valley). Larger surface figures may be acceptable when the end use application is appropriate, e.g. the larger the surface figure typically the less strong, chemically durable, and transparent the bond is likely to be. The surface should also have a good polish, e.g. an inspection-quality transparent polish.

The joining surfaces are preferably cleaned prior to joining, where bond strength and/or optical transparency are important, as is usual. Various aqueous and non-aqueous solutions may be used to remove hydrocarbon and/or particulate debris. The following solutions are suitable for such cleaning, e.g. ethanol, methanol, potassium hydroxide solution, Micro™ cleaning solution (available from Cole Palmer Instrument Co, Vernon Hills, IL 60061), deionized water, Branson GP ultrasonic cleaning solution (available from Branson, Danbury Connecticut 06810), among many others.

Each joining surface should be preferably cleaned for a time period ranging from 1 to 60 min, more preferably at least 30 minutes or whatever time suffices routinely for external cleaning. Cleaning may be conducted by immersing the glass into one of the aforementioned cleaning solutions, and agitating the solution with a Branson 3200 ultrasonic cleaner (also available from Branson, Danbury, Connecticut 06810).

The standard cleaning regimen utilized in each of the examples of this application comprises the following steps:

- rinse the monolith in deionized water
- place the monolith in Micro™ solution in an ultrasonic cleaner for 20 minutes
- rinse the monolith with deionized water
- place in 3.0 M $KOH_{(aq)}$ solution for 30 seconds (varies depending on chemical durability of the material being cleaned)
- rinse with deionized water
- rinse with ethanol
- rinse with methanol
- dry with ultra high purity nitrogen gas

- remove particles with $CO_2$ snow gun.

After the final cleaning stage, the samples are preferably stored in a dust free environment (beneath a clean glass enclosure or preferably a clean room environment) and allowed to dry. A class 100 clean room or laminar flow hood is recommended to prevent foreign material depositing upon the surfaces to be joined.

Once the joining surfaces are clean and dry, phosphorus-containing solution should be applied to one or both of the joining surfaces. In general terms, for applying manually, application quantity should be in the range of 0.1 to 1000 microliters per square centimeter, although 0.1 to 2.0 microliters per square centimeter is preferred. If dip-coating is the chosen application method, the amount of solution remaining on the surfaces will depend on the viscosity and surface tension of the liquid and the pressure applied to the monoliths during joining. It is preferred to minimize the amount of solution used while still adequately covering the joint, thereby reducing curing time and joint thickness.

The phosphorus-containing solution is preferably aqueous-based and is preferably prepared by mixing one or more water-soluble phosphorus containing raw materials with preferably deionized water, such that the $P_2O_5$ content (calculated) in solution is effective to join the surfaces according to the invention. Typically, about 0.1 to 85 weight % ($P_2O_5$) can be used, preferably less than or equal to 30 weight %, more preferably less than or equal to about 20 weight %. Most preferably the amount is about from 10 to 20 weight %.

The phosphorus-containing solution can be acidic (pH<7.0), neutral (pH=7.0) or basic (pH>7.0) depending on which raw material and any other component which is used to prepare the solution. In a preferred embodiment, the solution is acidic, utilizing dilute phosphoric acid.

Furthermore, the solution in another embodiment is basic and can contain alkali and/or alkaline earth elements - e.g. where sodium phosphate glasses were to be joined, one would preferably use a soluble sodium phosphate salt. This sodium phosphate solution chemistry would mimic the composition of the glass and may provide a better interface. Colloidal $Al_2O_3$ may be added to more closely match the glass composition and to provide a more durable joint. Generally, any component compatible with the glass substrate can be added to the phosphorus-containing solution.

Other components may be added to enhance solubility of the components of the solution, e.g. hydrochloric acid or the like to ensure a more dissolved solution.

Tables VII and VIII list general compositions of the phosphorus-containing solutions that are typically used to prepare hybrid substrates.

**Table VII - Preferred Compositional Space for the Phosphorus-Containing System**

| Oxide Component | Weight % | Preferred Weight % | Particularly Preferred Weight % |
|---|---|---|---|
| $H_2O$ | 15-99.9 | 50-90 | 70-90 |
| $P_2O_5$ | 0.1-85 | 5-35 | 10-30 |
| $Al_2O_3$ | 0-10 | 0-5 | 0 |
| $Li_2O$ | 0-15 | 0 | 0 |
| $Na_2O$ | 0-20 | 1-20 | 0-10 |
| $K_2O$ | 0-25 | 1-20 | 0 |
| MgO | 0-10 | 0 | 0 |
| CaO | 0-10 | 0 | 0 |
| BaO | 0-10 | 0 | 0 |
| SrO | 0-10 | 0 | 0 |
| $SiO_2$ | 0-27 | 0-15 | 0-8 |

**Table VIII. - Preferred Compositional Space for the Phosphorus-Containing System**

| Oxide Component | Wt% |
|---|---|
| $H_2O$ | 50-99.9 |
| $P_2O_5$ | 0.1-30 |
| $Al_2O_3$ | 0-10 |

(continued)

| Oxide Component | Wt% |
|---|---|
| $Li_2O$ | 0-15 |
| $Na_2O$ | 0-20 |
| $K_2O$ | 0-25 |
| MgO | 0-10 |
| CaO | 0-10 |
| BaO | 0-10 |
| SrO | 0-10 |

Typical raw materials used to prepare phosphorus-containing solutions include deionized water, NaOH, HCl, 85 weight % phosphoric acid, $P_2O_5$, hydrated or anhydrous alkali phosphate salts (i.e., $K_2HPO_4$, $KH_2PO_4$, $KPO_3$, $Na_2HPO_4$, $LiPO_3$, colloidal $Al_2O_3$ suspension), salts of the mentioned compounds, and other suitable similar phosphorus containing substances that are soluble in the solution, and all are generally commercially available.

The phosphate-containing solution can be additionally chemically modified to contain components which already exist within the materials that are being joined (i.e., Silicates, Oxides, Fluorides, Phosphates, Selenides, Telluride, Tantalates or other raw materials could be added to the phosphate joining solution). In particular, a soluble inorganic salt chemically similar to one of the materials being joined can be added to the solution. For example, where GaAs is being joined to a phosphate glass, GaCl could be added to the phosphate containing solution. Colloids could be added to the phosphate-containing solution to attain additional chemical modification. For instance, $SiO_2$ colloids could be added to a phosphate-containing solution which was intended for joining a $SiO_2$ monolith to a phosphate glass.

The phosphorus-containing solution should preferably be applied onto the joining surface of a monolith using a pipette or by dip coating. However, any method commonly used to dispense liquid could be employed for this step in the joining process, e.g. aerosol dispensing, pouring, dispersing, spraying, joining while submersed in a bath of phosphorous-containing solution, etc.

Once the phosphate-containing solution has been applied, the joining surfaces on two separate monoliths are brought into contact to sandwich the phosphorus containing solution between the bonding surfaces. Upon contact, the solution should spread across each of the glass surfaces and form a homogeneous interlayer. If air bubbles form, they may be removed by the application of a vacuum.

After the liquid interlayer is formed, the liquid begins to cure and will typically harden after 1-7 days at room temperature. Heat treatments ranging from 25-120°C may be used to accelerate the curing process or to improve the chemical durability and mechanical strength of the resulting joint interface. If a heat treatment is utilized, the joint may be fully cured in <24 h, however, sufficient time should be allowed for $H_2O$ evaporation, or else the heat treatment could result in joint failure. The joint assembly may, if desired, be placed under an external compressive force and/or vacuum to accelerate the joining process and/or to promote good joining in situations where thin sheets or lightweight monoliths are being joined. To further accelerate curing, higher temperatures can be used if desired, up to the glass transition temperature of the least refractory monolith that is contained within the joint assembly. More preferably, curing is effected at about 50-120°C for 5-24 hours, followed by a reduction of the temperature to slowly remove water from the joint interface.

After sufficient room temperature curing, the hybrid joint assembly should be strong enough to be subjected to oil based cutting, grinding and polishing without fracture. The joint in another embodiment after curing may be subjected to an additional heat treatment at a temperature below the glass transition temperature of the particular phosphate glass, e.g. typically ranging from 50° C to 500° C. The heat treatment further strengthens and cures the joint, enabling it to be cut and polished in aqueous environments without failure at the joint interface.

In another embodiment, the joined glass may be heated to a temperature above the glass transition point of the glasses being joined, but this is not necessary to obtain the benefits of the invention.

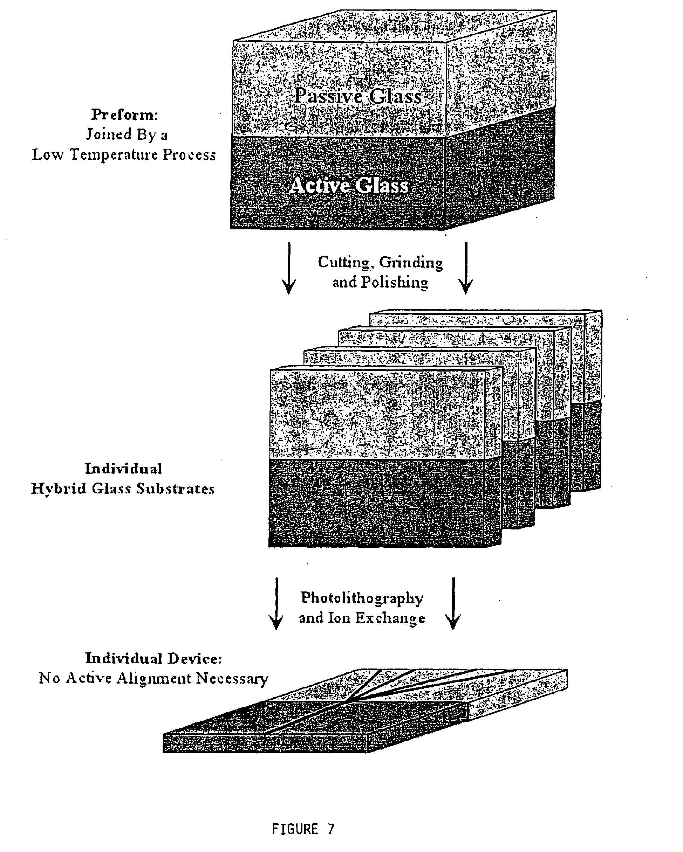

In a preferred method of fabricating photonic devices, the novel method of joining substrates is used to provide a hybrid joint assembly. This hybrid joint assembly is then further processed into thin substrates or other shapes for the ultimate end use in a photonic device (see Figure 7). Ideally the performance of the photonic device is improved by use of a hybrid substrate over a monolithic substrate. The template can be of any shape or size (as determined by the specific application).

The thickness of the joint interface is usually dependant on the starting surface figure of the joining surfaces i.e., materials with poor surface figure or with surface irregularities will yield hybrids with thicker joint interfaces. Conversely, materials with good surface figure will yield hybrids with thinner joint interfaces. In general, the flatter the surface before joining, and thinner the resulting joint, the better the optical quality. Thus, for many optical applications the monoliths should have a surface figure of ~200nm prior to joining. Such flat monoliths can generally be used to form hybrid joint assemblies where the joint interface is <500nm thick. However, this application is not limited to joint assemblies with <500nm thick joint interfaces.

Although the applicants believe what follows to be the mechanism through which the bonding process occurs, they offer the explanations contained herein by way of theoretical explanation and do not wish to be bound by the theory.

Dissolution reactions are believed to ensue once the solution comes into contact with the two flat, polished joining surfaces. For example, where one of the monoliths is a phosphate glass, this dissolution reaction would increase the concentration of phosphorus species (i.e., $PO_4^{3-}$, $HPO_4^{2-}$, $H_2PO_4^-$, and $H_3PO_4$) in the interfacial region. Further, dissolution of the non-phosphate monolith (i.e., $LiNbO_3$) would increase the concentration of other species (i.e., $Li^+$, $Nb^{+5}$) in the interfacial region.

Figure 3 illustrates a theoretical reaction mechanism whereby the inventive novel joint is formed. Turning to the phase labeled "a" it may be seen that when the concentration of phosphorus species in the phosphorus-containing joining solution is low, it is believed that the majority exist as $H_xPO_4^{(x-3)}$ monomers (i.e. in the dilute phase, e.g. of phosphoric acid or the like, when mixed with the appropriate preferably aqueous carrier).

However, it is believed that as the concentration of phosphorus species is increased as seen in phase "b" (from e.g., from glass, dissolution and evaporation of $H_2O$ from the interfacial region), condensation reactions convert the $H_xPO_4^{(x-3)}$ monomers into -P-O-P-O-P- chains, as illustrated in the phase marked with reference "b". A rigid, condensed phosphate phase is formed at the interface, as illustrated in the phase marked "c", once the P-O-P cross-linking proliferates to the two joining surfaces. The $(P-O-P)^n$ cross linking can occur over wide approximate values of n, e.g. high values of 1,000,000, 500,000, and low values of 2, 10, 100, and 1000.

The rigid condensed phosphate interface is believed to be, depicted in Figure 3-C, responsible for the chemical bonding at the joint interface. The rigidity of the condensed phosphorus phase (and consequently the strength of the joint) is enhanced during the curing as $H_2O$ evaporates from the interface or diffuses into the monoliths, and the (P-O-P) cross-linking within the interfacial region is increased.

The dissolution of dissimilar materials into the joint interface (i.e., the dissolution of $Li^+$ and/or $Nb^{5+}$ from $LiNbO_3$ while it is being joined to a phosphate glass) can improve the cross-linking within the rigid, condensed phosphate joint interface. Further, such dissolution of dissimilar monoliths can yield an interfacial region that has some chemical similarity to both of the monoliths that are being joined (i.e., the interfacial region would contain phosphate species similar to those found within the phosphate glass, and $Li^+$, $Nb^{5+}$ species similar to those found within $LiNbO_3$).

The hybrid joint assemblies formed by this novel process are considered rigid because they are not typically deformed or fractured when subjected to oil-based cutting, grinding and polishing. However, excessive amounts of residual water remaining in the condensed phosphate joint interface could result in a semi-rigid joint that could undergo plastic deformation.

A semi-rigid joint can be avoided by utilizing longer curing times, application of a vacuum, and/or by subjecting the joint to a post-curing heat treatment at a temperature >25°C, but below the glass transition temperature of any glass in the joint or, where multiple glasses are used, the glass having the lowest glass transition temperature. A suitable range is from about 30 to 550°C, preferably from about 50° to about 375°C, more preferably from about 70 to about 150°C. A particularly preferred heat treatment is at a temperature of 120°C.

The instant inventive joined composites from both aspects of the invention find many uses, especially where a low-loss joint is essential. In addition to the utilities disclosed herein, additional utilities and devices incorporating both aspects of the invention are disclosed in (Atty. Dkt. No. BKARM-1 WO), which was earlier entirely incorporated by reference.

### Integrated Photonic Devices

Table IX lists general photonic devices that could possibly be improved by integrating multiple materials within a single photonic chip. The various photonic devices are listed in the left column. The right column lists each of the monoliths that would likely be joined together (using the phosphate-containing, low temperature joining process) to form the respective photonic device. Also note that in general, each of the devices listed would also have an optical isolator attached at the input and output points.

**Table IX: Photonic Devices that could be Fabricated using a Hybrid Approach**

| Device | Components that Must be Integrated |
|---|---|
| Transmitter | source + modulator + coupler + amplifier |
| Ultra broadband amplifier | demux and/or active-mux |

(continued)

| Device | Components that Must be Integrated |
|---|---|
| Reciever | PMD-couper + splitter + input level monitoring + amplifier + gain flattener + DEMUX + Photodiode |
| loss less splitter | Optical amplifier + splitter |
| gain flattened amplifier (hybride material) | Gain flattened device prepared in a single structure |
| OADM (integrated opticaladd/drop MUX) | DEMUX + variable, single channel OA switch / or Router + OA + MUX |

The following section will describe the materials, which could be used for various photonic devices.

**Photonic Sources (Light generation)**

Photonic sources are used to generate (usually monochromatic, continuous wave) light.

- Laser diode or laser diode array (VCSEL); materials: GaAs, InP
- Glass-based laser sources; materials: rare earch doped phosphate, silicate, fluoride, telluride, fluorophosphate and ABLAN glass (where the identity of the base glass and rare earth are selected to provide desired wavelength(s) of operation)
- Laser diode pumped glass laser with a DBR grating (Northstar Photonics, Laser Focus word);[7] materials: semiconductor pump laser (Si, GaAs, InP), active glass section (phosphate glass), end mirrors, undoped phosphate glass section with surface relief grating
- Tunable laser sources based on laser diode or active glass; materials:

    semiconductor laser diodes (Si, GaAs, InP) and active glass section (glass could be rare earth doped phosphate, silicate, fluoride, telluride, fluorophosphate and ZBLAN glass), and end mirrors

**Modulation Devices**

Modulation devices convert a continuous light beam into a modulated beam, i.e, to alternating conditions of "0=off" and "1=on" via electrooptic effects in materials such as $LiNbO_3$.

- Modulation devices are often prepared with optically active crystals, such an $LiNbO_3$. A modulation device could be joined directly to an active glass or laser diode source to add additional features, such as the capability to modulate the resulting light prior to emission from the hybrid device. Materials that might be joined for this application are $LiNbO_3$, chalcogenide-glass, rare earth doped phosphate, silicate, fluoride, telluride, fluorophosphate and ABLAN glass.

**Polarization Preserving or Modulating Devices**

In optical transmission systems polarization dependent effects are very important, therefore the control and/or compensation of these effects are important, usually its not basic material properties that are employed here, but specifically designed devices (usually electrooptic devices).

- Certain materials can be used to preserve or modulate the polarization of light. These optically active or inactive materials could be joined to active glass or laser diode sources to add additional features such as the capability to modulate, select and/or separate the resultant light prior to emission from the constructed hybrid device. Materials that might be joined for this application are $LiNbO_3$, other crystals where birefringence can be induced, rare earth doped phosphate, silicate, fluoride, telluride, fluorophosphate and ZBLAN glass.

**Multiplexing/Demultiplexing Devices**

These are wavelength selective elements that combine the information from several light streams at different wavelengths into one fiber (multiplex); or, that perform a demultiplex operation, i.e., extract the different wavelengths out of a single fiber. Multiplexing and Demultiplexing devices are often prepared by applying coating stacks onto silicate or phosphate glass, semiconductors, or onto glass ceramics. These materials could be joined to optical waveguides or fibers prepared in rare earth doped phosphate, silicate, fluoride, telluride, fluorophosphate and ZBLAN glass to form hybrid devices with increased functionality.

**Optical Amplification Devices**

Semiconductor, glass or crystalline optical amplifiers might be joined to offer hybrid devices capable of broadband amplification. Each different material may have the ability to amplify a specific range of wavelengths. However, by joining the different materials, one may envision a hybrid amplifier chip capable of broadband amplification. Further, these hybrid amplifier chips could be joined to waveguides, multiplexing or demultiplexing devices, optical fibers or splitters. This type of broad-band amplification device may require joints between glass, crystalline and semiconductor materials. Further, this may require joints between the same type of glass with different rare-earth dopants in each region.

**Dispersion Compensation Devices**

Due to chromatic disperson (= wavelength depended propagation velocity of the light) in fibers, the signal shape broadens over fiber length, thus to reshape the individual signals this process has to be inverted, thus a device/fiber with inverse dispersion behavior has to be used. This can be done by (a) a specially designed fiber, (b) a fiber with a long period fiber bragg grating, (c) a material with anormalous dispersion. Such materials with dispersion compensation capability can be joined with other materials, e.g., PMD, chromatic dispersion.

**Switching**

These devices select whether a device is transparent or not for a specific wavelength of light $\Rightarrow$ many approches, many different materials, usually using a) thermooptic, electrooptic, optooptic effect, or non-linear properties of material can be employed. Switches are realized in a wide variaty of materials: a) semiconductor by semiconductor optical amplifiers), b) $SiO_2$, c) glasses with high non-linear optical coefficients (heavy metal oxide, chalcogenide, lead containing), and d) crystals(LiNbO3).

Non-linear optical materials capable of switching light on/off or into different optical paths could be joined with other devices described here, such as nonlinear glasses, crystalline materials such as $LiNbO_3$, chalcogenide materials, and/or materials with thermooptic or electrochromic properties.

**Substrates for multiple wavelength arrays**

A phosphate-containing solution can be used to join an <u>active</u> laser glass (e.g., a glass with the general composition in Table I that contains >0.05 wt% of a rare earth oxide, other than $La_2O_3$) with a <u>passive</u> laser glass (e.g., a glass with the general composition in Table I, where $La_2O_3$ is the only rare earth oxide incorporated into the glass). Such substrates could be used to fabricate multiple-wavelength arrays for telecommunication sources and measurement tools for optical fiber systems.[7,8] A pictorial representation of a multiple wavelength array that could be fabricated from a hybrid glass substrate is shown in Figure 4. The active portion of the substrate would act as a broad-band laser, and the passive portion would act as a distributed-Bragg-reflector (DBR) grating, which would allow for wavelength selectivity. Such a laser source could simultaneously produce the multiple wavelengths necessary for dense wave division multiplexing (DWDM) systems and components.

The joining technology described in this patent disclosure provides a new and innovative method for preparing joints between active and passive phosphate laser glass in a manner that provides sufficient mechanical strength, low loss (<0.01 dB) and minimal birefringence at the interface. Such a method could be used to prepare hybrid glass substrates (i.e., active to passive), that could then be fabricated into a multiple wavelength array. The low temperature joining process is considered cost effective because one large hybrid glass substrate prepared by a materials supplier (i.e., Schott Glass Technologies) could be sectioned by oil-based cutting, grinding and polishing to prepare a multitude of multiple wavelength arrays for the photonics industry. After preparing the hybrid materials, optical waveguides may be implemented.

**Substrates for multiple waveguide lasers**

An active phosphate laser glass could be joined to a passive phosphate laser glass in the manner described above. A waveguide design, similar to that shown in Figure 5 could be "written" onto the substrate (by ion exchange techniques) such that a single source of pump light focused onto the passive laser glass section could be guided to several waveguide lasers in the active section. This design would allow multiple waveguide lasers within the active portion to be simultaneously pumped by a single source. Furthermore, the pumping light would not suffer appreciable absorption in the passive glass, since the passive phosphate laser glass is transparent at 980 nm (the wavelength typically used to pump an active Er/Yb doped phosphate laser glass).[7,8] As with the previous application, the cost-effective method of preparing large hybrid glass substrates, good mechanical strength, low loss (<0.01 dB) and minimal birefringence associated with room temperature phosphate solution joining make this application a reality.

**Substrates for lossless splitters**

An active phosphate laser glass could be joined to a passive phosphate laser glass in the manner described above. Digital information carried within a single waveguide in the passive section could be split into several waveguides in the active section. A pump laser would then be used to amplify the signal in the active section, see Figure 6. Such technology could be used for the lossless splitting of broadband digital and cable television (CATV) information.[4] As with the previous applications, the cost-effective method of preparing large hybrid glass substrates, good mechanical strength, low loss (<0.01 dB) and minimal birefringence associated with room temperature phosphate solution joining make this application a reality.

**Substrates for self-cooling laser sources**

Successive sections of active and passive phosphate laser glass could be joined by the low temperature process described in this patent disclosure. Such a system could be used as a hybrid laser where the active sections would participate in light amplification, and the passive sections would simply transmit the light (without amplification) and provide a sufficient volume of non-lasing material for "self-cooling." This self-cooling system would reduce thermal noise when a phosphate laser glass is used for high power applications. As with the previous applications, the cost-effective method of preparing large hybrid glass substrates, good mechanical strength, low loss (<0.01 dB) and minimal birefringence associated with room temperature phosphate solution joining make this application a reality.

**General hybrid photonic devices**

Any hybrid photonic device where substrates composed of active to active, active to passive and passive to passive phosphate glass junctions could provide enhanced performance over a monolithic system. The hybrid substrate should have suitable mechanical strength such that it can be machined, ground and polished without fracture. The hybrid device should be a good transmitter of light at a particular wavelength (i.e., good transmittance at 1300 or 1540 nm may be desirable for fiber optic telecommunication systems). Finally, the interface between different sections of glass should have minimal birefringence to minimize any loss of intensity or change in the polarization of light as it travels from one section of glass into another.

BRIEF DESCRIPTION OF THE DRAWINGS

The Figures apply to both aspects of the invention.

Figure 1 is a scanning electron microscopy image of a typical joint interface prepared by joining two materials, e.g., phosphate glasses, according to the present invention.
Figure 2 is a graphical representation of a transmittance test for a joined composite or hybrid according to the instant invention.
Figure 3 illustrates a nonlimiting theoretical reaction mechanism whereby the inventive novel joint is formed.
Figure 4 is a perspective view of an exemplary waveguide laser array constructed from a hybrid substrate prepared according to the instant invention.
Figure 5 is a perspective view of an exemplary array of lasers simultaneously pumped by a single laser diode fabricated on a hybrid substrate according to the present invention.
Figure 6 is a perspective view of an exemplary 4 x 1 lossless splitter fabricated on a hybrid substrate according to the present invention.
Figure 7 details a process that could be used to fabricate waveguide devices for the photonics industry.

Without further elaboration, it is believed that one skilled in the art can, using the preceding description, utilize the present invention to its fullest extent. The following preferred specific embodiments are, therefore, to be construed as merely illustrative, and not limitative of the remainder of the disclosure in any way whatsoever.
In the foregoing and in the following examples, all temperatures are set forth uncorrected in degrees Celsius; and, unless otherwise indicated, all parts and percentages are by weight.
In the following examples, each of the materials listed in Table IX was prepared into samples nominally 5 x 20 x 20 mm. The surfaces intended for joining were then ground and polished to obtain a surface figure (flatness) of =200 nm (peak to valley).

## EXAMPLES

EXAMPLE 1

An active lasing phosphate glass composite is fabricated using the following method. The active glasses are prepared according to the method of US Patent 5,334,559, with the following compositions:

## Active Glass (i.e. with Lasing Capabilities) Composition

| Oxide Component | Weight % |
|---|---|
| $P_2O_5$ | 68.16 |
| $Al_2O_3$ | 10.61 |
| $La_2O_3$ | 0.42 |
| $Na_2O$ | 11.91 |
| $Er_2O_3$ | 1.74 |
| $Yb_2O_3$ | 7.16 |

The components are prepared in 25 mm diameter disc shapes of 5 mm thickness. Each is polished on one of their flat surfaces to a surface figure less than 200 nanometers.
The glass discs were then cleaned in an abbreviated cleaning procedure, as follows:

-    rub with methanol and clean wipe
-    rinse with deionized water
-    10 minutes ultrasonic cleaning in Micro™ cleaning solution
-    rinse with deionized water
-    immerse for 30 seconds in 3.0 molar potassium hydroxide (KOH) solution
-    rinse with deionized water
-    rinse with ethanol
-    rinse with methanol.

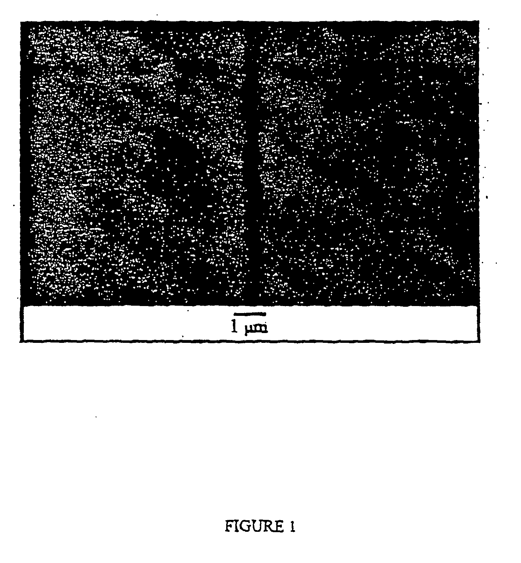

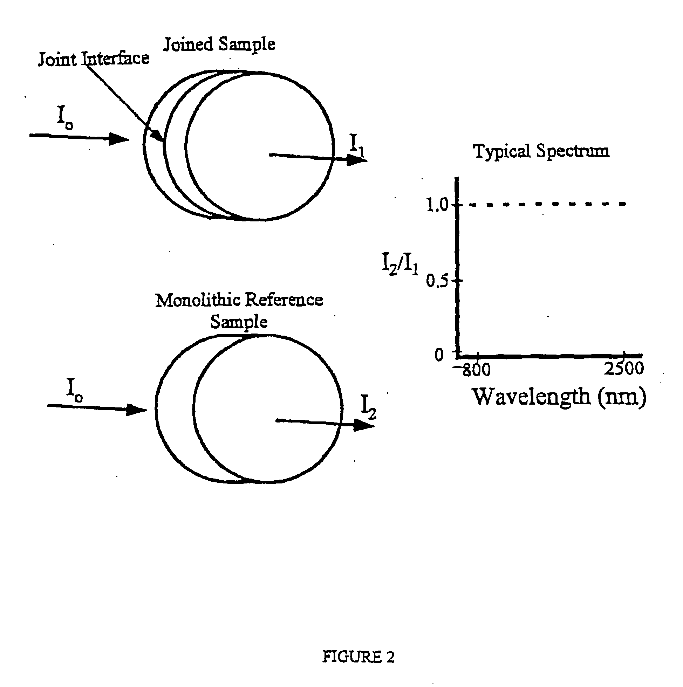

Then 0.25 microliters per square centimeter of an about 20 weight % $P_2O_5$ solution were applied to the polished surface of one glass disc. The solution was prepared from a commercially available phosphoric acid, which is 85 weight percent $H_3PO_4$. The phosphoric acid was diluted with ionized water to a concentration which contained 20 weight % $P_2O_5$ (calculated on a weight basis). The solution was then agitated by hand, as the components were easily miscible. The thoroughly mixed solution was then filtered through a 0.2 micron polycarbonate filter. The filtered solution was centrifuged at an appropriate speed for about 5 minutes to remove any particulates. The centrifuged solution was then transferred to a new container to remove any sludge or particles in the centrifuged container. The filtered, centrifuged solution was then kept in a clean box until ready for use. A pipette was used to dispense the appropriate amount (i.e. 0.25 $\mu$l/cm$^2$) onto the glass surface.
The second glass disc was then brought into contact from above in a laboratory environment (i.e. not within a clean room). Once the solution was sandwiched between the two polished surfaces, the discs were then translated relative to each other to remove bubbles from the joint
The components were then cured at room temperature for seven days. A rigid joint (which could not be broken by hand) was formed. The joint was examined by scanning electron microscope (SEM) in the following manner. The active to active joint was cut and polished in oil (Beuhler lapping oil) and coated with carbon. The exposed joint was then analyzed by SEM to result in Figure 1, which shows the uniform and thin (<500 nm) interface that was formed when phosphate glasses were prepared and joined as described above.
The percent transmittance of the joined material was measured using a Perkin Elmer, Lambda-9 UV/VIS/NIR spectrometer (available from Perkin Elmer Corporation, Norwalk, Connecticut 06856). Radiation of 1300 nanometer wavelength was directed into the composite material and a reference monolithic sample as illustrated in Figure 2. The percent transmittance is calculated using the following formula:

$$\%T = I / I_o \times 100$$

where I is the transmitted light intensity, and $I_o$ is the incident light intensity.

This method can be used to compare the relative transmittance (from at least 800 to 2500 nm) between an un-joined reference sample and a sample that had a joint perpendicular to the measurement direction.

The transmittance, at 1300 nm, of the active to active bonded phosphate glass was measured to be 92.1%. The monolithic reference sample was measured to be 92.2%.

About an 8% loss of transmission occurs at the air to phosphate glass interfaces of both the reference monolithic sample and the joined phosphate glass due to the difference in refractive index of air and glass). Thus, only about 0.1% loss of transmittance may be attributable to the joint (which is approximately the accuracy of the measuring equipment).

The percent loss in transmittance from a non-absorbing glass with flat, parallel, polished surfaces can be calculated using Equation (1):

$$R = \frac{2 \cdot n}{\left(n^2 + 1\right)} \times 100 \qquad\qquad (1)$$

where R is the percent of incident light that is reflected and n is the refractive index of the glass at the wavelength of interest (i.e., 1300 nm).

The phosphate glass had a nominal refractive index of $1.513 \pm 0.003$ at 1300 nm, which corresponds to a loss in transmittance (R) ranging from 7.9 to 8.1 (which accounts for the about 8% loss in transmittance through each sample). The small 0.1% deviation in percent transmittance between the joined (92.1% transmittance) and monolithic (92.2% transmittance) samples may be attributable to the loss at the joint interface. This 0.1% deviation in percent transmittance is near the accuracy of the Lambda-9 spectrometer, and only accounts for a loss of <0.01 dB. This small <0.01 dB loss is considered acceptable for photonic applications, since such a loss only occurs at one point (at the interface) and not throughout the entire photonic device.

EXAMPLE 2

An active and passive phosphate glass are joined in the following manner. The active glass has the composition as noted in example 1, and is prepared in the same way as in example 1. The configuration of the active component was in a parallelepiped with a height of 17 mm, a width of 20 mm, and a length of 50 mm.

The passive glass was formed in the same manner, with the composition below:

**Passive Glass (i.e with no Lasing Capabilities) Composition**

| Oxide | Weight % |
| --- | --- |
| P2O5 | 69.20 |
| Al2O3 | 10.77 |
| La2O3 | 7.94 |
| Na2O | 12.09 |
| Er2O3 | 0 |
| Yb2O3 | 0 |

The passive glass was also a parallelepiped having a height of 33 mm, and a width and length matched to that of the active glass. The glasses were polished as per example 1 and cleaned in a similar manner, except that they were ultrasonically cleaned for 20 minutes in the Micro™ solution.

Then, in a clean box (dust-free polymeric enclosure), 0.3 microliters per square centimeter of phosphorus-containing solution were applied to the active glass polished surface. The passive glass polished surface was then brought into contact with the active glass polished surface to sandwich the phosphorus-containing solution between the two glasses and the joint assembly was placed into a vacuum dessicator to remove bubbles from the interface.

After the joint had cured for three days, a heat treatment was applied to the joined sample. The joined sample was gradually (60°C per hour) heated from room temperature to 70° C and maintained there for 20 hours. The joined sample was then raised in temperature gradually (5°C per hour) to 150°C, where it was held for 5 hours. The joined sample was then raised in temperature gradually (20°C per hour) to 375° C, where it was held for 5 hours. The sample was then gradually (60°C per hour) cooled to room temperature.

This sample could be, and was, cut using water-based cutting. Plates 2mm in thickness were cut from one side such that the plates were 50 mm tall, 50 mm wide, and 2 mm thick. The plates also survived water-based polishing. Utilizing the same percent transmittance method as for Example 1, the transmittance of the cut and polished active-passive sample was 92.2%, the same as the monolithic sample of example 1.

The joined samples had the same transmittance characteristics as the monolithic reference sample. Thus, when prepared according to the instant invention, the interface is optically transparent (at least to the measurement capabilities of the Lambda -9 spectrometer) in at least the 800 to 2500 nm spectral range, and especially at the 1300 nm range, a common telecommunications wavelength.

On average, depending on measurement method and preparation method to prepare the novel joints, a loss of between 0.1 to 0.3 % of transmission may be expected. This is such a low loss that for most applications, including lasers and telecommunications, it is a virtually lossless connection.

EXAMPLE 3

The polished joining surfaces of the various materials listed on Table X were cleaned prior to joining using various aqueous and non-aqueous solutions to remove hydrocarbon and/or particulate debris. The following solutions were utilized for cleaning (not necessarily in the order listed): ethanol, methanol, 3.0 M potassium hydroxide solution, Micro* cleaning solution, HF acid solution, amonia/hydrogen peroxide solution, deionized water, and Branson GP ultrasonic cleaning solution.** Each joining surface was successively cleaned with the various solutions listed above for a time period ranging from 30 sec. to 60 min. Cleaning was typically conducted by immersing the glass into one of the aforementioned solutions, and agitating the solution with a Branson 3200 ultrasonic cleaner. After the final cleaning stage, the samples were stored in a dust free environment (beneath a clean glass enclosure) and allowed to dry. A clean room was not used for the preliminary testing, however, a lab-scale clean bench was employed to assist in keeping the surfaces as clean as possible.

* Cole Palmer Instrument Co., Vernon Hills, IL 60061
** Branson, Danbury, CT 06810

The cleaning regimen outlined above was used to prepare hydrophilic surfaces that would be "chemically primed" for joining. The hydrophilic nature of the surface was simply tested after cleaning by applying a small drop (1-5 $\mu$l) of deionized water using a pipette. Surfaces were considered to be hydrophilic if the water spread across the surface with a low contact angle (<30°).

Once the polished joining surfaces were clean and dry, a small volume (1 to 10 $\mu$l) of the phosphate containing joining solution (Tables VII and VIII) was applied to form the various joints listed in Table X. The aqueous phosphate-containing solution (Table VIII) was prepared by mixing one or more water-soluble raw materials with deionized water, such that the $P_2O_5$ content (calculated) in solution ranged from 0.1 to 30 wt%. The phosphate-containing solution can be acidic (pH<7.0), neutral (pH=7.0) or basic (pH>7.0) depending on which raw material is used to prepare the solution. However, acidic phosphate-containing solutions were used to prepare each of the prototype samples listed in Table VII. Typical raw materials used to prepare the phosphate-containing solution are listed below, and all are commercially available. Some of the raw materials listed below (i.e., $SiO_2$, $CaF_2$) may be sparingly soluble in aqueous solution. Thus, these insoluble raw materials could be added to the phosphate-containing solution in the form of small particles or colloids.

- 85 wt% phosphoric acid
- $P_2O_5$
- Hydrated or anhydrous alkali phosphate salts (i.e., $K_2HPO_4$, $KH_2PO_4$, $KPO_3$, $Na_2BPO_4$, $LiPO_3$, etc).
- Oxide salts: $SiO_2$, $Na_2O$, $K_2O$, $Li_2O$, CaO, MgO, $TeO_2$, ....
- Fluoride salts: $CaF_2$, $ZrF_4$, BaF, $LaF_3$, $AlF_3$, NaF, $InF_3$
- Chalcongenide salts: AsS, GaS, MeTe, MeSe, etc. ("Me" means different metallions)
- Colloidal $Al_2O_3$ or other suspensions
- Dopands: Er, Yb, Tm, Nd, Pr, others

To ensure that the phosphate containing solution was free from particulate debris >200nm in size, the solution was subjected to centrifugation for 5 minutes, and was then filtered through a 200 nm filter. The filtered phosphate-containing solution was generally applied onto the joining surface in a volume ranging from 1 to 1000 $\mu$l/cm$^2$ using a pipette or by dip coating. However, any method commonly used to dispense liquid (i.e., spraying, dip-coating, pouring, spin-coating, dripping, etc) could be employed for this step in the joining process.

The joining surfaces on two separate discs were brought into contact, after a small volume of phosphate containing solution was applied onto one of the surfaces. Upon contact, the solution spread across each of the glass surfaces and formed a homogeneous interlayer. After the liquid interlayer was formed, the joint assembly was allowed to "cure" and harden for 1 to 7 days at room temperature (22-27 °C). The joint assembly was not placed under any external compressive force, however, pressure could be used to accelerate the joining process and/or to promote good joining in situations where thin sheets or lightweight monoliths are being joined.

A rigid joint was typically formed after 1 to 7 days of curing at room temperature. However, some joint assemblies were subjected to mild heat treatments (between 25 and 150°C to accelerate curing). Most of the joints listed in Table X were tested for mechanical robustness by subjecting the joint assemblies to water-based cutting, grinding and polishing. These polished joint assemblies are available for viewing.

**Table X: Various Successful Joining Examples**

| Material A | Material B | Solution |
|---|---|---|
| Phosphate Glass | Fluorophosphate Glass | Phosphate, see Table VIII |
| Phosphate Glass | Telluride Glass | Phosphate, see Table VIII |
| Phosphate Glass | Single Crystal CaF$_2$ | Phosphate, see Table VIII |
| Phosphate Glass | Single Crystal LiNbO$_3$ | Phosphate, see Table VIII |
| Phosphate Glass | Multi-Component Silicate Glass | Phosphate, see Table VIII |
| Phosphate Glass | Chalcogenide Glass (AsS Glass) | Phosphate, see Table VIII |
| Phosphate Glass | ZBLAN | Phosphate, see Table VIII |
| Phosphate Glass | SiO$_2$ | Phosphate, see Table VIII |
| SiO$_2$ | SiO$_2$ | Phosphate, see Table VIII |
| SiO$_2$ | Multi-Component Silicate Glass | Phosphate, see Table VIII |

The entire disclosure of all applications, patents and publications cited above and throughout this application are hereby incorporated by reference.

The preceding examples can be repeated with similar success by substituting the generically or specifically described compositions, reactants and/or operating conditions of this invention for those used in the preceding examples.

From the foregoing description, one skilled in the art can easily ascertain the essential characteristics of this invention and, without departing from the spirit and scope thereof, can make various changes and modifications of the invention to adapt it to various usages and conditions.

**Claims**

1. A glass composite comprising:

    a first phosphate glass surface;
    a second phosphate glass surface; and between and in contact with said surfaces, a phosphorus-containing solution.

2. A glass composite as claimed in claim 1, wherein the phosphorus-containing solution is an aqueous solution.

3. A glass composite as claimed in claim 1, wherein the phosphorus-containing solution is an aqueous solution of phosphoric acid.

4. A glass composite as claimed in claim 3, wherein the aqueous solution of phosphoric acid contains phosphorus equivalent to an amount of from 0.1 to 85 weight % of $P_2O_5$.

5. A glass composite as claimed in claim 4, wherein the aqueous solution of phosphoric acid contains phosphorus equivalent to an amount of from 0.1 to 30 weight % of $P_2O_5$.

6. A glass composite as claimed in claim 5, wherein the aqueous solution of phosphoric acid contains phosphorus equivalent to an amount of from 0.1 to 20 weight % of $P_2O_5$.

7. A glass composite as claimed in claim 6, wherein the aqueous solution of phosphoric acid contains phosphorus equivalent to an amount of from 10-20 weight % of $P_2O_5$.

8. A glass composite as claimed in claim 1, wherein the solution is acidic.

9. A glass composite as claimed in claim I, wherein the solution is basic.

10. A glass composite as claimed in claim 9, wherein the solution contains alkali or alkaline earth elements.

11. A glass composite as claimed in claim 8, wherein the solution contains phosphoric acid.

12. A glass composite as claimed in claim 1, wherein the solution comprises:

    water in an amount of from about 15-99.9 weight %,
    phosphorus in an amount equivalent to about 0.1-85 weight % $P_2O_5$.

13. A glass composite as claimed in claim 11, wherein the solution comprises
    water in an amount of from about 50-90 weight %,
    phosphorus in an amount equivalent to about 5-35 weight % $P_2O_5$.
    Na$_2$O in a amount of from about 1-20 weight %,
    K$_2$O in an amount of from about 1-20 weight %,
    Al$_2$O$_3$ in an amount of from about 0-5 weight %, and
    SiO$_2$ in an amount of from about 0-15 weight %.

14. A glass composite as claimed in claim 11, wherein the solution comprises
    water in an amount of from about 70-90 weight %,
    phosphorus in an amount equivalent to about 10-30 weight % $P_2O_5$
    Na$_2$O in a amount of from about 1-20 weight %, and
    SiO$_2$ in an amount of from about 0-8 weight %.

15. A glass composite comprising:

    a first phosphate glass interface;
    a second phosphate glass interface; and
    between and in contact with said interface, a layer comprising a cured phosphorus containing solution.

16. A glass composite comprising:

    a first phosphate glass interface;
    a second phosphate glass interface; and
    between and in contact with said interface, a condensed phosphate layer that links the two interfaces.

17. A glass composite as claimed in claim 16, wherein the condensed phosphate layer is a (P-O-P) layer.

18. A glass composite prepared by joining two phosphate glass substrates together by curing there between a phosphorus-containing aqueous solution.

19. A method of bonding two phosphate glass surfaces comprising curing there between a phosphorus-containing aqueous solution.

20. A method as claimed in claim 19, further comprising a subsequent heat treatment.

21. A method as claimed in claim 20, wherein the heat treatment occurs at a temperature below the glass transition temperature of each phosphate glass surface.

22. A method as claimed in claim 20, wherein the heat treatment occurs at a temperature of from about 60°C to about 550°C.

23. A method as claimed in claim 22, wherein the he at treatment occurs at a temperature of from about 100° C to about 500° C.

24. A method as claimed in claim 23, wherein the heat treatment occurs at a temperature of from about 200 °C to about 400 °C.

25. A method as claimed in claim 24, wherein the heat treatment occurs at a temperature of from about 350 °C to about 400 °C.

26. A method as claimed in claim 19, wherein the curing is conducted for at least three days followed by a heat treatment.

27. A method as claimed in claim 19, wherein the curing is conducted for about a week.

28. A method as claimed in claim 27, wherein the curing is followed by a heat treatment.

29. A method as claimed in claim 19, wherein the two phosphate glass surfaces each have surface features equal to or less than 200 nm in height.

30. A method as claimed in claim 29, wherein the two phosphate glass surfaces are each polished.

31. A process for the formation of a phosphate-based glass composite, comprising:

providing a first phosphate-based glass having a first surface and a second phosphate-based glass having a second surface,
processing said first and second phosphate-based glass surfaces to provide a bonding surface,
providing a solution containing a phosphorus compound,
applying said phosphorus compound containing solution to at least one of said first and second phosphate-based glass surfaces,
placing said first surface into contact with said second surface, and
retaining said surfaces in contact until said surfaces are joined tagether while the composite cures.

32. A process as claimed in claim 31, further comprising heating the joined surfaces to a temperature below the glass transition temperature of the first or second phosphate-based glass surface.

33. A process as claimed in claim 31, wherein a vacuum is applied while the composite cures.

34. A process as claimed in claim 31, wherein the process is conducted at about room temperature.

35. A process as claimed in claim 31, wherein said step of processing said first and second phosphate-based glass surfaces comprises grinding or polishing.

36. A process as claimed in claim 35, wherein the resulting surface has a surface feature of less than 200 nm.

37. A process as claimed in claim 31, further comprising, after the step of processing, cleaning said first and second processed surfaces.

38. A process as claimed in claim 31, wherein pressure is applied to the phosphate-based glass surfaces.

39. A process as claimed in claim 31, wherein the temperature of the phosphate based glass surfaces is gradually raised during the step of retaining.

40. In a photonic device comprising a phosphate glass component, the improvement wherein said phosphate glass component is a glass composite of claim 2.

41. A photonic device as claimed in claim 40, wherein the photonic device is a multiple-wavelength laser array.

42. A photonic device as claimed in claim 41, wherein the photonic device is a low-loss splitting device.

43. A photonic device as claimed in claim 42, wherein the photonic device is a self-cooling laser.

44. A hybrid comprising a first phosphate glass monolith; and a second monolith, said second monolith being a glass, metal coating or crystalline material, each monolith capable of being wet by an aqueous solution; and between and in contact with said monoliths, a phosphorus-containing solution, wherein said second monolith is other than a phosphate glass.

45. A hybrid according to claim 44, wherein said second monolith is a multi component oxide glass, a non-oxide glass, a mixed oxide glass, or a pure $SiO_2$ glass.

46. A hybrid according to claim 45, wherein said second monolith is a multicomponent oxide glass which is a silicate, phosphate, borate, germanate, telluride or aluminate glass.

47. A hybrid according to claim 45, wherein said second monolith is a non-oxide glass which is a chalcogenide, fluoride, heavy metal fluoride or sulfide glass.

48. A hybrid according to claim 47, wherein said second monolith is ZBLAN[2] or $AS_2S_3$ glass.

49. A hybrid according claim 45, wherein said first monolith is a mixed oxide/fluoride glass, which is a fluorophosphate glass.

50. A hybrid according to claim 44, wherein said second monolith is a single crystalline material.

51. A hybrid according to claim 50, wherein the single crystalline material is a non-semi-conducting material.

52. A hybrid according to claim 51, wherein the single crystalline material is $LiNbO_3$, $CaF_2$, LiF, NaCl, AgCl, KI, AgBr or $Al_2O_3$.

53. A hybrid according to claim 50, wherein the single crystalline material is a semi-conducting material.

54. A hybrid according to claim 53, wherein the single crystalline material is GaAs, InP, ZnS, ZnSe, ZnTe, Si or Ge.

55. A hybrid according to claim 44, wherein said second monolith is pure, telecom-grade $SiO_2$ or Gedoped $SiO_2$,

56. A hybrid according to claim 44, wherein said first monolith is a phosphate glass of the composition

| Oxide Component | Wt% |
|---|---|
| $P_2O_5$ | 55-75 |
| $Al_2O_3$ | 0-20 |
| $Re_2O_3$ | 0-15 |
| $La_2O_3$ | 0-15 |
| $Li_2O$ | 0-15 |
| $Na_zO$ | 0-15 |
| $K_zO$ | 0-15 |
| MgO | 0-15 |
| CaO | 0-15 |

(continued)

| Oxide Component | Wt% |
| --- | --- |
| SrO | 0-15 |
| BaO | 0-15 |
| $As_z0_3$ | 0-3 |
| $Sb_2O_3$ | 0-3 |

$Re_2O_3$ symbolizes any rare earth oxide besides $La_2O_3$.

57. A hybrid according to claim 44, wherein said first monolith is a fluorophosphate glass of the composition

| Oxide Component | Wt% |
| --- | --- |
| ½ $P_2O_s$ | 5-30 |
| $AlF_3$ | 20-45 |
| $ReF_3$ | 0-8 |
| $LaF_3$ | 0.12 |
| LiF | 0-30 |
| NaF | 0-30 |
| KF | 0-30 |
| $MgF_z$ | 0-55 |
| $CaF_z$ | 0-55 |
| $SrF_z$ | 0-55 |
| $BaF_z$ | 0-55 |
| $As_z0_3$ | 0-3 |
| $Sb_zO_J$ | 0-3 |

$Re_2O_3$ symbolizes any rare earth oxide.

58. A hybrid according to claim 44, wherein said second monolith is a telluride glass of the composition

| Telluride | Glass wt. -% |
| --- | --- |
| Te02 | 86,1 |
| ZnO | 11, 7 |
| Na20 | 2,23 |

59. A hybrid according to claim 44, wherein said second monolith is a silicate glass of the composition

| Oxide Component | Wt% |
| --- | --- |
| $SiO_2$ | 50-80 |
| $Al_z0_3$ | 0-24 |
| $Re_z0_3$ | 0-15 |
| $La_2O_3$ | 0-15 |
| $B_2O_3$ | 0-18 |
| $R_2O$ R=Li, Na, K | 5-25 |
| $Li_2O$ | 0-25 |
| $Na_zO$ | 0-25 |
| $K_2O$ | 0-25 |
| MgO | 0-30 |
| CaO | 0-30 |
| SrO | 0-30 |
| BaO | 0-30 |

(continued)

| Oxide Component | Wt% |
|---|---|
| ZnO | 0-30 |
| $TiO_2$ | 0-3 |
| $As_2O_3$ | 0-3 |
| $Sb_2O_3$ | 0-3 |
| F- | 0-12 |

$Re_2O_3$ symbolizes any rare earth oxide

**60.** A hybrid according to claim 44, wherein said second monolith is a chalcogenide glass of the composition 100% AsS.

**61.** A hybrid according to claim 44, wherein said second monolithis a fluoride glass of the composition

| 53 | $ZrF_4$ |
|---|---|
| 20 | $BaF_2$ |
| 4 | $LaF_3$ |
| 3 | $AlF_3$ |
| 20 | NaF |
| 0.75 | $InF_3$ |

, wherein this glass can be additionally doped with various rare earth of other lasing ions.

**62.** A hybrid according to claim 56, wherein said second monolith is a chalcogenide glass of the composition 100% AsS.

**63.** A hybrid according to claim 56, wherein said second monolith is a telluride glass of the composition

| $TeO2$ | 86.1 |
|---|---|
| ZnO | 11.7 |
| $Na2O$ | 2.23. |

**64.** A hybrid according to claim 58, wherein said first monolith is a fluorophosphate glass of the composition

| Oxide Component | Wt% |
|---|---|
| ½ $P_2O_5$ | 5-30 |
| $AlF_3$ | 20-45 |
| $ReF_3$ | 0-8 |
| $LaF_3$ | 0.12 |
| LiF | 0-30 |
| NaF | 0-30 |
| KF | 0-30 |
| $MgF_z$ | 0-55 |
| $CaF_z$ | 0-55 |
| $SrF_z$ | 0-55 |
| $BaF_z$ | 0-55 |
| $As_zO_3$ | 0-3 |
| $Sb_zO_J$ | 0-3 |

, wherein $Re_2O_3$ symbolizes any rare earth oxide.

**65.** A hybrid according to claim 44, wherein said first monolithis a phosphate glass of the composition

| Oxide Component | Wt% |
|---|---|
| $P_2O_5$ | 55-75 |
| $Al_2O_3$ | 0-20 |
| $Re_2O_3$ | 0-15 |
| $La_2O_3$ | 0-15 |
| $Li_zO$ | 0-15 |
| $Na_zO$ | 0-15 |
| $K_zO$ | 0-15 |
| $MgO$ | 0-15 |
| $CaO$ | 0-15 |
| $SrO$ | 0-15 |
| $BaO$ | 0-15 |
| $As_zO_3$ | 0-3 |
| $Sb_2O_3$ | 0-3 |

, wherein $Re_2O_3$ symbolizes any rare earth oxide besides $La_2O_3$
and the second monolith is single crystal $CaF_2$.

**66.** A hybrid according to claim 44, wherein said first monolith is a phosphate glass of the composition

| Oxide Component | Wt% |
|---|---|
| $P_2O_5$ | 55-75 |
| $Al_2O_3$ | 0-20 |
| $Re_2O_3$ | 0-15 |
| $La_2O_3$ | 0-15 |
| $Li_zO$ | 0-15 |
| $Na_zO$ | 0-15 |
| $K_zO$ | 0-15 |
| $MgO$ | 0-15 |
| $CaO$ | 0-15 |
| $SrO$ | 0-15 |
| $BaO$ | 0-15 |
| $As_zO_3$ | 0-3 |
| $Sb_2O_3$ | 0-3 |

, wherein $Re_2O_3$ symbolizes any rare earth oxide besides $La_2O_3$
and the second monolith is single crystal $LiNbO_3$

**67.** A hybrid according to claim 44, wherein the phosphorus-containing solution is an aqueous solution of phosphoric acid.

**68.** A hybrid according to claim 44, wherein the phosphorus-containing solution is an aqueous solution of phosphoric acid.

**69.** A hybrid according to claim 67, wherein the aqueous solution of phosphoric acid contains phosphorus equivalent to an amount of from 0.1 to 85 weight % of $P_2O_5$.

**70.** A hybrid according to claim 44, wherein the
solution comprises water in an amount of about 50 - 99.9 weight %,
Phosphorus in an amount equivalent to about 0.1-35 weight % $P_2O_5$,
$Na_2O$ in an amount of about 0-20 weight %,
$Al_2O_3$ in an amount of about 0-5 weight %, and
$SiO_2$ in an amount of about 0-15 weight %.

**71.** A hybrid comprising a first phosphate glass monolith and a second monolith, being a glass, metal coating or crystalline material, each monolith capable of being wet by an aqueous solution; said second monolith being other than phosphate glass, and in between said monoliths a layer comprising a cured phosphorous containing solution.

72. A hybrid comprising a first phosphate glass monolith and a second monolith being a glass, metal coating or crystalline material, each monolith capable of being wet by an aqueous solution; said second monolith being other than phosphate glass, and in between said monoliths a condensed phosphate-rich layer that links the monoliths.

73. A hybrid according to claim 72, wherein the condensed phosphate layer contains P-O-P bonds and is rigid.

74. A hybrid prepared by joining a first phosphate glass monolith and a second monolith being a glass, metal coating or crystalline material, each monolith capable of being wet by an aqueous solution, and said second monolith being other than a phosphate glass, by curing there between a phosphorus-containing aqueous solution.

75. A method of building a first phosphate glass monolith; and a second monolith being a glass, metal coating or crystalline material, and each monolith capable of being wet by an aqueous solution, and said second monolith being other than a phosphate glass by curing there between a phosphorus-containing aqueous solution.

76. A method according to claim 75, further comprising a subsequent heat treatment.

77. A method as claimed in claim 79, wherein the heat treatment occurs at a temperature of from about 30 °C to about 150°C.

**Patentansprüche**

1. Glasverbund, umfassend:

   eine erste Phosphatglasoberfläche,
   eine zweite Phosphatglasoberfläche, und zwischen und in Kontakt mit den Oberflächen, eine phosphorhaltige Lösung.

2. Glasverbund nach Anspruch 1, wobei die phosphorhaltige Lösung eine wässrige Lösung ist.

3. Glasverbund nach Anspruch 1, wobei die phosphorhaltige Lösung eine wässrige Phosphorsäurelösung ist.

4. Glasverbund nach Anspruch 3, wobei die wässrige Phosphorsäurelösung Phosphor äquivalent einem Anteil von 0,1 bis 85 Gewichts-% $P_2O_5$ enthält.

5. Glasverbund nach Anspruch 4, wobei die wässrige Phosphorsäurelösung Phosphor äquivalent einem Anteil von 0,1 bis 30 Gewichts-% $P_2O_5$ enthält.

6. Glasverbund nach Anspruch 5, wobei die wässrige Phosphorsäurelösung Phosphor äquivalent einem Anteil von 0,1 bis 20 Gewichts-% $P_2O_5$ enthält.

7. Glasverbund nach Anspruch 6, wobei die wässrige Phosphorsäurelösung Phosphor äquivalent einem Anteil von 10 - 20 Gewichts-% $P_2O_5$ enthält.

8. Glasverbund nach Anspruch 1, wobei die Lösung sauer ist.

9. Glasverbund nach Anspruch 1, wobei die Lösung basisch ist.

10. Glasverbund nach Anspruch 9, wobei die Lösung Alkali- oder Erdalkalielemente enthält.

11. Glasverbund nach Anspruch 8, wobei die Lösung Phosphorsäure enthält.

12. Glasverbund nach Anspruch 1, wobei die Lösung umfasst:

   Wasser in einem Anteil von ungefähr 15 - 99,9 Gewichts-%, Phosphor in einem Anteil, der äquivalent zu ungefähr 0,1 - 85 Gewichts-% $P_2O_5$ ist.

13. Glasverbund nach Anspruch 11, wobei die Lösung umfasst:

Wasser in einem Anteil von ungefähr 50 - 90 Gewichts-%,
Phosphor in einem Anteil, der ungefähr 5 - 35 Gewichts-% $P_2O_5$ äquivalent ist,
$Na_2O$ in einem Anteil von ungefähr 1 - 20 Gewichts-%,
$K_2O$ in einem Anteil von ungefähr 1 - 20 Gewichts-%,
$Al_2O_3$ in einem Anteil von ungefähr 0 - 5 Gewichts-% und
$SiO_2$ in einem Anteil von ungefähr 0 - 15 Gewichts-%.

14. Glasverbund nach Anspruch 11, wobei die Lösung umfasst:

Wasser in einem Anteil von ungefähr 70 - 90 Gewichts-%,
Phosphor in einem Anteil, der ungefähr 10 - 30 Gewichts-% $P_2O_5$ äquivalent ist,
$Na_2O$ in einem Anteil von ungefähr 1 - 20 Gewichts-% und
$SiO_2$ in einem Anteil von ungefähr 0 - 8 Gewichts-%.

15. Glasverbund umfassend:

eine erste Phosphatglasgrenzfläche,
eine zweite Phosphatglasgrenzfläche, und
zwischen und in Kontakt mit der Grenzfläche, eine Schicht, die eine ausgehärtete, phosphorhaltige Lösung umfasst.

16. Glasverbund, umfassend:

eine erste Phosphatglasgrenzfläche,
eine zweite Phosphatglasgrenzfläche, und
zwischen und in Kontakt mit der Grenzfläche, eine Schicht aus kondensiertem Phosphat, welche die beiden Grenzflächen verbindet.

17. Glasverbund nach Anspruch 16, wobei die Schicht aus kondensiertem Phosphat eine (P-O-P)-Schicht ist.

18. Glasverbund, der durch Verbinden zweier Phosphatglassubstrate miteinander durch Aushärten einer phosphorhaltigen wässrigen Lösung zwischen diesen hergestellt ist.

19. Verfahren zum Verbinden zweier Phosphatglasoberflächen, welches das Aushärten einer phosphorhaltigen wässrigen Lösung zwischen diesen umfasst.

20. Verfahren nach Anspruch 19, welches ferner eine nachfolgende Wärmebehandlung umfasst.

21. Verfahren nach Anspruch 20, wobei die Wärmebehandlung bei einer Temperatur unterhalb der Glasübergangstemperatur jeder Phosphatglasoberfläche erfolgt.

22. Verfahren nach Anspruch 20, wobei die Wärmebehandlung bei einer Temperatur von ungefähr 60 °C bis ungefähr 550 °C erfolgt.

23. Verfahren nach Anspruch 22, wobei die Wärmebehandlung bei einer Temperatur von ungefähr 100 °C bis ungefähr 500 °C erfolgt.

24. Verfahren nach Anspruch 23, wobei die Wärmebehandlung bei einer Temperatur von ungefähr 200 °C bis ungefähr 400 °C erfolgt.

25. Verfahren nach Anspruch 24, wobei die Wärmebehandlung bei einer Temperatur von ungefähr 350 °C bis ungefähr 400 °C erfolgt.

26. Verfahren nach Anspruch 19, wobei das Aushärten mindestens drei Tage lang ausgeführt wird, worauf eine Wärmebehandlung folgt.

27. Verfahren nach Anspruch 19, wobei das Aushärten ungefähr eine Woche lang ausgeführt wird.

28. Verfahren nach Anspruch 27, wobei auf das Aushärten eine Wärmebehandlung folgt.

29. Verfahren nach Anspruch 19, wobei die beiden Phosphatglasoberflächen jeweils Oberflächenstrukturen mit einer Höhe kleiner oder gleich 200 nm aufweisen.

30. Verfahren nach Anspruch 29, wobei die beiden Phosphatglasoberflächen jeweils poliert werden.

31. Prozess zur Ausbildung eines Glasverbunds auf Phosphatbasis, umfassend:

Bereitstellen eines ersten Glases auf Phosphatbasis mit einer ersten Oberfläche und eines zweiten Glases auf Phosphatbasis mit einer zweiten Oberfläche,
Bearbeiten der Oberflächen des ersten und zweiten Glases auf Phosphatbasis, um eine Verbindungsoberfläche bereitzustellen,
Bereitstellen einer Lösung, die eine Phosphorverbindung enthält,
Aufbringen der die Phosphorverbindung enthaltenden Lösung auf mindestens eine der Oberflächen der Gläser auf Phosphatbasis, die erste oder die zweite,
In-Kontakt-Bringen der ersten Oberfläche mit der zweiten Oberfläche, und
In-Kontakt-Halten der Oberflächen, bis die Oberflächen miteinander verbunden sind, während der Verbund aushärtet.

32. Prozess nach Anspruch 31, welcher ferner das Erwärmen der verbundenen Oberflächen auf eine Temperatur unterhalb der Glasübergangstemperatur der ersten oder zweiten Oberfläche der Gläser auf Phosphatbasis umfasst.

33. Prozess nach Anspruch 31, wobei ein Unterdruck angelegt wird, während der Verbund aushärtet.

34. Prozess nach Anspruch 31, wobei der Prozess bei ungefähr Raumtemperatur ausgeführt wird.

35. Prozess nach Anspruch 31, wobei der Schritt der Bearbeitung der ersten und zweiten Oberfläche der Gläser auf Phosphatbasis Schleifen oder Polieren umfasst.

36. Prozess nach Anspruch 35, wobei die resultierende Oberfläche eine Oberflächenstruktur von weniger als 200 nm aufweist.

37. Prozess nach Anspruch 31, welcher ferner, nach dem Schritt der Bearbeitung, das Reinigen der ersten und zweiten bearbeiteten Oberfläche umfasst.

38. Prozess nach Anspruch 31, wobei Druck auf die Oberflächen der Gläser auf Phosphatbasis ausgeübt wird.

39. Prozess nach Anspruch 31, wobei die Temperatur der Oberflächen der Gläser auf Phosphatbasis während des Schrittes des In-Kontakt-Haltens allmählich angehoben wird.

40. Bei einem photonischen Bauelement, das eine Phosphatglaskomponente umfasst, die Verbesserung wonach die Phosphatglaskomponente ein Glasverbund gemäß Anspruch 2 ist.

41. Photonisches Bauelement nach Anspruch 40, wobei das photonische Bauelement ein Mehrwellenlängen-Laserarray ist.

42. Photonisches Bauelement nach Anspruch 41, wobei das photonische Bauelement ein verlustarmes Splitter-Bauelement ist.

43. Photonisches Bauelement nach Anspruch 42, wobei das photonische Bauelement ein selbstkühlender Laser ist.

44. Hybrid, der einen ersten Monolith aus Phosphatglas sowie einen zweiten Monolith umfasst, wobei der zweite Monolith ein Glas, eine Metallbeschichtung oder ein kristallines Material ist, wobei jeder Monolith von einer wässrigen Lösung benetzt sein kann und wobei sich zwischen und in Kontakt mit den Monolithen eine phosphorhaltige Lösung befindet, wobei der zweite Monolith kein Phosphatglas ist.

45. Hybrid nach Anspruch 44, wobei der zweite Monolith ein Mehrkomponentenoxid-Glas, ein Nichtoxid-Glas, ein Mischoxid-Glas, oder ein reines $SiO_2$-Glas ist.

46. Hybrid nach Anspruch 45, wobei der zweite Monolith ein Mehrkomponentenoxid-Glas ist, das ein Silikat-, Phosphat-, Borat-, Germanat-, Tellurid- oder Aluminatglas darstellt.

47. Hybrid nach Anspruch 45, wobei der zweite Monolith ein Nichtoxid-Glas ist, das ein Chalkogenid-, Fluorid-, Schwermetallfluorid- oder Sulfidglas darstellt.

48. Hybrid nach Anspruch 47, wobei der zweite Monolith ZBLAN® oder $As_2S_3$-Glas ist.

49. Hybrid nach Anspruch 45, wobei der erste Monolith ein Mischoxid-/Fluoridglas ist, das ein Fluorophosphatglas darstellt.

50. Hybrid nach Anspruch 44, wobei der zweite Monolith ein einkristallines Material ist.

51. Hybrid nach Anspruch 50, wobei das einkristalline Material ein nicht halbleitendes Material ist.

52. Hybrid nach Anspruch 51, wobei das einkristalline Material $LiNbO_3$, $CaF_2$, LiF, NaCl, AgCl, KI, AgBr oder $Al_2O_3$ ist.

53. Hybrid nach Anspruch 50, wobei das einkristalline Material ein halbleitendes Material ist.

54. Hybrid nach Anspruch 53, wobei das einkristalline Material GaAs, InP, ZnS, ZnSe, ZnTe, Si oder Ge ist.

55. Hybrid nach Anspruch 44, wobei der zweite Monolith reines $SiO_2$ in Telekommunikationsgüte oder Ge-dotiertes $SiO_2$ ist.

56. Hybrid nach Anspruch 44, wobei der erste Monolith ein Phosphatglas mit folgender Zusammensetzung ist:

| Oxidkomponente | Gew.-% |
|---|---|
| $P_2O_5$ | 55-75 |
| $Al_2O_3$ | 0-20 |
| $Re_2O_3$ | 0-15 |
| $La_2O_3$ | 0-15 |
| $Li_2O$ | 0-15 |
| $Na_2O$ | 0-15 |
| $K_2O$ | 0-15 |
| MgO | 0-15 |
| CaO | 0-15 |
| SrO | 0-15 |
| BaO | 0-15 |
| $As_2O_3$ | 0-3 |
| $Sb_2O_3$ | 0-3, |

wobei $Re_2O_3$ ein beliebiges Seltenerdoxid neben $La_2O_3$ symbolisiert.

57. Hybrid nach Anspruch 44, wobei der erste Monolith ein Fluorophosphatglas mit folgender Zusammensetzung ist:

| Oxidkomponente | New.-% |
|---|---|
| ½ $P_2O_5$ | 5-30 |
| $AlF_3$ | 20-45 |
| $ReF_3$ | 0-8 |

(fortgesetzt)

| Oxidkomponente | New.-% |
|---|---|
| $LaF_3$ | 0,12 |
| LiF | 0-30 |
| NaF | 0-30 |
| KF | 0-30 |
| $MgF_2$ | 0-55 |
| $CaF_2$ | 0-55 |
| $SrF_2$ | 0-55 |
| $BaF_2$ | 0-55 |
| $As_2O_3$ | 0-3 |
| $Sb_2O_3$ | 0-3, |

wobei $Re_2O_3$ ein beliebiges Seltenerdoxid symbolisiert.

**58.** Hybrid nach Anspruch 44, wobei der zweite Monolith ein Telluridglas mit folgender Zusammensetzung ist:

| Telluridglas | Gew.-% |
|---|---|
| $TeO_2$ | 86,1 |
| ZnO | 11,7 |
| $Na_2O$ | 2,23 |

**59.** Hybrid nach Anspruch 44, wobei der zweite Monolith ein Silikatglas mit folgender Zusammensetzung ist:

| Oxidkomponente | Gew.-% |
|---|---|
| $SiO_2$ | 50-80 |
| $Al_2O_3$ | 0-24 |
| $Re_2O_3$ | 0-15 |
| $La_2O_3$ | 0-15 |
| $B_2O_3$ | 0-18 |
| $R_2O$ R=Li, Na, K | 5-25 |
| $Li_2O$ | 0-25 |
| $Na_2O$ | 0-25 |
| $K_2O$ | 0-25 |
| MgO | 0-30 |
| CaO | 0-30 |
| SrO | 0-30 |
| BaO | 0-30 |
| ZnO | 0-30 |
| $TiO_2$ | 0-3 |
| $As_2O_3$ | 0-3 |
| $Sb_2O_3$ | 0-3 |
| F- | 0-12, |

wobei $Re_2O_3$ ein beliebiges Seltenerdoxid symbolisiert.

**60.** Hybrid nach Anspruch 44, wobei der zweite Monolith ein Chalkogenidglas mit einer Zusammensetzung aus 100% AsS ist.

**61.** Hybrid nach Anspruch 44, wobei der zweite Monolith ein Fluoridglas mit folgender Zusammensetzung ist:

| | |
|---|---|
| 53 | $ZrF_4$ |
| 20 | $BaF_2$ |
| 4 | $LaF_3$ |
| 3 | $AlF_3$ |
| 20 | NaF |
| 0,75 | $InF_3$, |

wobei dieses Glas zusätzlich mit verschiedenen Seltenerd- oder anderen Laserionen dotiert sein kann.

**62.** Hybrid nach Anspruch 56, wobei der zweite Monolith ein Chalkogenidglas mit einer Zusammensetzung aus 100% AsS ist.

**63.** Hybrid nach Anspruch 56, wobei der zweite Monolith ein Telluridglas mit folgender Zusammensetzung ist:

| Oxidkomponente | Gew.-% |
|---|---|
| $TeO_2$ | 86,1 |
| ZnO | 11,7 |
| $Na_2O$ | 2,23. |

**64.** Hybrid nach Anspruch 58, wobei der erste Monolith ein Fluorophosphatglas mit folgender Zusammensetzung ist:

| Oxidkomponente | Gew.-% |
|---|---|
| ½ $P_2O_5$ | 5-30 |
| $AlF_3$ | 20-45 |
| $ReF_3$ | 0-8 |
| $LaF_3$ | 0, 12 |
| LiF | 0-30 |
| NaF | 0-30 |
| KF | 0-30 |
| $MgF_2$ | 0-55 |
| $CaF_2$ | 0-55 |
| $SrF_2$ | 0-55 |
| $BaF_2$ | 0-55 |
| $As_2O_3$ | 0-3 |
| $Sb_2O_3$ | 0-3, |

wobei $Re_2O_3$ ein beliebiges Seltenerdoxid symbolisiert.

**65.** Hybrid nach Anspruch 44, wobei der erste Monolith ein Phosphatglas mit folgender Zusammensetzung ist:

| Oxidkomponente | Gew.-% |
|---|---|
| $P_2O_5$ | 55-75 |
| $Al_2O_3$ | 0-20 |
| $Re_2O_3$ | 0-15 |
| $La_2O_3$ | 0-15 |
| $Li_2O$ | 0-15 |
| $Na_2O$ | 0-15 |
| $K_2O$ | 0-15 |
| MgO | 0-15 |
| CaO | 0-15 |
| SrO | 0-15 |

(fortgesetzt)

| Oxidkomponente | Gew.-% |
|---|---|
| BaO | 0-15 |
| $As_2O_3$ | 0-3 |
| $Sb_2O_3$ | 0-3, |

wobei $Re_2O_3$ ein beliebiges Seltenerdoxid neben $La_2O_3$ symbolisiert und der zweite Monolith einkristallines $CaF_2$ ist.

**66.** Hybrid nach Anspruch 44, wobei der erste Monolith ein Phosphatglas mit folgender Zusammensetzung ist:

| Oxidkomponente | Gew.-% |
|---|---|
| $P_2O_5$ | 55-75 |
| $Al_2O_3$ | 0-20 |
| $Re_2O_3$ | 0-15 |
| $La_2O_3$ | 0-15 |
| $Li_2O$ | 0-15 |
| $Na_2O$ | 0-15 |
| $K_2O$ | 0-15 |
| MgO | 0-15 |
| CaO | 0-15 |
| SrO | 0-15 |
| BaO | 0-15 |
| $As_2O_3$ | 0-3 |
| $Sb_2O_3$ | 0-3, |

wobei $Re_2O_3$ ein beliebiges Seltenerdoxid neben $La_2O_3$ symbolisiert und der zweite Monolith einkristallines $LiNbO_3$ ist.

**67.** Hybrid nach Anspruch 44, wobei die phosphorhaltige Lösung eine wässrige Phosphorsäurelösung ist.

**68.** Hybrid nach Anspruch 44, wobei die phosphorhaltige Lösung eine wässrige Phosphorsäurelösung ist.

**69.** Hybrid nach Anspruch 67, wobei die wässrige Phosphorsäurelösung Phosphor äquivalent einem Anteil von 0,1 bis 85 Gewichts-% $P_2O_5$ enthält.

**70.** Hybrid nach Anspruch 44, wobei die Lösung umfasst:

Wasser in einem Anteil von ungefähr 50 - 99,9 Gewichts-%,
Phosphor in einem Anteil, der äquivalent zu ungefähr 0,1 - 35 Gewichts-% $P_2O_5$ ist,
$Na_2O$ in einem Anteil von ungefähr 0 - 20 Gewichts-%,
$Al_2O_3$ in einem Anteil von ungefähr 0 - 5 Gewichts-% und
$SiO_2$ in einem Anteil von ungefähr 0 - 15 Gewichts-%.

**71.** Hybrid, der einen ersten Monolith aus Phosphatglas und einen zweiten Monolith umfasst, der ein Glas, eine Metallbeschichtung oder ein kristallines Material darstellt, wobei jeder Monolith von einer wässrigen Lösung benetzt sein kann, wobei der zweite Monolith kein Phosphatglas ist und wobei sich zwischen den Monolithen eine Schicht befindet, die eine ausgehärtete phosphorhaltige Lösung umfasst.

**72.** Hybrid, der einen ersten Monolith aus Phosphatglas und einen zweiten Monolith umfasst, der ein Glas, eine Metallbeschichtung oder ein kristallines Material darstellt, wobei jeder Monolith von einer wässrigen Lösung benetzt sein kann, wobei der zweite Monolith kein Phosphatglas ist und wobei sich zwischen den Monolithen eine an kondensiertem Phosphat reiche Schicht befindet, welche die Monolithen verbindet.

**73.** Hybrid nach Anspruch 72, wobei die Schicht aus kondensiertem Phosphat P-O-P-Bindungen enthält und starr ist.

**74.** Hybrid, hergestellt durch Verbinden eines ersten Monolithen aus Phosphatglas und eines zweiten Monolithen, der aus einem Glas, einer Metallbeschichtung oder kristallinem Material besteht, wobei jeder Monolith von einer wässrigen Lösung benetzt sein kann und wobei der zweite Monolith kein Phosphatglas ist, durch Aushärten einer phosphorhaltigen wässrigen Lösung zwischen diesen.

**75.** Verfahren zum Aufbau eines erstes Monolithen aus Phosphatglas und eines zweites Monolithen, der aus einem Glas, einer Metallbeschichtung oder kristallinem Material besteht, wobei jeder Monolith von einer wässrigen Lösung benetzt sein kann und wobei der zweite Monolith kein Phosphatglas ist, durch Aushärten einer phosphorhaltigen wässrigen Lösung zwischen diesen.

**76.** Verfahren nach Anspruch 75, welches ferner eine nachfolgende Wärmebehandlung umfasst.

**77.** Verfahren nach Anspruch 79, wobei die Wärmebehandlung bei einer Temperatur von ungefähr 30 °C bis ungefähr 150°C erfolgt.

## Revendications

**1.** Composite de verre, comprenant :

une première surface de verre au phosphate ;
une seconde surface de verre au phosphate ; et entre et en contact avec lesdites surfaces, une solution contenant du phosphore.

**2.** Composite de verre suivant la revendication 1, dans lequel la solution contenant du phosphore est une solution aqueuse.

**3.** Composite de verre suivant la revendication 1, dans lequel la solution contenant du phosphore est une solution aqueuse d'acide phosphorique.

**4.** Composite de verre suivant la revendication 3, dans lequel la solution aqueuse d'acide phosphorique contient une quantité de phosphore équivalente à une quantité de 0,1 à 85 % en poids de $P_2O_5$.

**5.** Composite de verre suivant la revendication 4, dans lequel la solution aqueuse d'acide phosphorique contient une quantité de phosphore équivalente à une quantité de 0,1 à 30 % en poids de $P_2O_5$.

**6.** Composite de verre suivant la revendication 5, dans lequel la solution aqueuse d'acide phosphorique contient une quantité de phosphore équivalente à une quantité de 0,1 à 20 % en poids de $P_2O_5$.

**7.** Composite de verre suivant la revendication 6, dans lequel la solution aqueuse d'acide phosphorique contient une quantité de phosphore équivalente à une quantité de 10 à 20 % en poids de $P_2O_5$.

**8.** Composite de verre suivant la revendication 1, dans lequel la solution est acide.

**9.** Composite de verre suivant la revendication 1, dans lequel la solution basique.

**10.** Composite de verre suivant la revendication 9, dans lequel la solution contient des éléments alcalins ou alcalino-terreux.

**11.** Composite de verre suivant la revendication 8, dans lequel la solution de l'acide phosphorique.

**12.** Composite de verre suivant la revendication 1, dans lequel la solution comprend :

de l'eau en une quantité d'environ 15 à 99,9 % en poids, et
du phosphore en une quantité équivalente à une quantité d'environ 0,1 à 85 % en poids de $P_2O_5$.

**13.** Composite de verre suivant la revendication 11, dans lequel la solution comprend :

de l'eau en une quantité d'environ 50 à 90 % en poids,

du phosphore en une quantité équivalente à une quantité d'environ 5 à 35 % en poids de $P_2O_5$,
du $Na_2O$ en une quantité d'environ 1 à 20 % en poids,
du $K_2O$ en une quantité d'environ 1 à 20 % en poids,
du $Al_2O_3$ en une quantité d'environ 0 à 5 % en poids, et
du $SiO_2$ en une quantité d'environ 0 à 15 % en poids.

14. Composite de verre suivant la revendication 11, dans lequel la solution comprend :

de l'eau en une quantité d'environ 70 à 90 % en poids,
du phosphore en une quantité équivalente à une quantité d'environ 10 à 30 % en poids de $P_2O_5$,
du $Na_2O$ en une quantité d'environ 1 à 20 % en poids, et
du $SiO_2$ en une quantité d'environ 0 à 85 % en poids.

15. Composite de verre comprenant :

une première interface de verre au phosphate ;
une seconde interface de verre au phosphate ; et
entre et en contact avec lesdites interfaces, une couche comprenant une solution durcie contenant du phosphore.

16. Composite de verre comprenant :

une première interface de verre au phosphate ;
une seconde interface de verre au phosphate ; et
entre et en contact avec lesdites interfaces, une couche de phosphate condensée qui lie les deux interfaces.

17. Composite de verre suivant la revendication 16, dans lequel la couche de phosphate condensée est une couche de (P-O-P).

18. Composite de verre préparé en joignant deux substrats en verre au phosphate l'un à l'autre par durcissement entre ces deux substrats d'une solution aqueuse contenant du phosphore.

19. Procédé de liaison de deux surfaces de verre au phosphate, comprenant le durcissement entre ces deux surfaces d'une solution aqueuse contenant du phosphore.

20. Procédé suivant la revendication 19, comprenant en outre un traitement thermique ultérieur.

21. Procédé suivant la revendication 20, dans lequel le traitement thermique est effectué à une température inférieure à la température de transition vitreuse de chaque surface de verre au phosphate.

22. Procédé suivant la revendication 20, dans lequel le traitement thermique est effectué à une température d'environ 60°C à environ 550°C.

23. Procédé suivant la revendication 22, dans lequel le traitement thermique est effectué à une température d'environ 100°C à environ 500°C.

24. Procédé suivant la revendication 23, dans lequel le traitement thermique est effectué à une température d'environ 200°C à environ 400°C.

25. Procédé suivant la revendication 24, dans lequel le traitement thermique est effectué à une température d'environ 350°C à environ 400°C.

26. Procédé suivant la revendication 19, dans lequel le durcissement est effectué pendant au moins trois jours, avec ensuite un traitement thermique.

27. Procédé suivant la revendication 19, dans lequel le durcissement est effectué pendant environ une semaine.

28. Procédé suivant la revendication 27, dans lequel le durcissement est suivi par un traitement thermique.

**29.** Procédé suivant la revendication 19, dans lequel les deux surfaces de verre au phosphate ont chacune des caractéristiques de surface ayant une hauteur égale ou inférieure à 200 nm.

**30.** Procédé suivant la revendication 29, dans lequel les deux surfaces de verre au phosphate sont chacune polies.

**31.** Procédé pour la formation d'un composite de verre à base de phosphate, comprenant les étapes consistant à :

fournir un premier verre à base de phosphate ayant une première surface et un second verre à base de phosphate ayant une seconde surface,
traiter lesdites première et seconde surfaces de verre à base de phosphate pour fournir une surface de liaison,
fournir une solution contenant un composé de phosphore,
appliquer ladite solution contenant un composé de phosphore à au moins une desdites première et seconde surfaces de verre à base de phosphate,
placer ladite première surface en contact avec ladite seconde surface, et
maintenir lesdites surfaces en contact jusqu'à ce que lesdites surfaces soient jointes l'une à l'autre lors du durcissement du composite.

**32.** Procédé suivant la revendication 31, comprenant en outre le chauffage des surfaces jointes à une température inférieure à la température de transition vitreuse de la première ou seconde surface de verre à base de phosphate.

**33.** Procédé suivant la revendication 31, dans lequel un vide est appliqué lors du durcissement du composite.

**34.** Procédé suivant la revendication 31, ledit procédé étant mis en oeuvre approximativement à température ambiante.

**35.** Procédé suivant la revendication 31, dans lequel ladite étape de traitement desdites première et seconde surfaces de verre à base de phosphate comprend un meulage ou polissage.

**36.** Procédé suivant la revendication 35, dans lequel la surface résultante a une caractéristique de surface de moins de 200 nm.

**37.** Procédé suivant la revendication 31, comprenant en outre, après l'étape de traitement, le nettoyage desdites première et seconde surfaces traitées.

**38.** Procédé suivant la revendication 31, dans lequel une pression est appliquée aux surfaces de verre à base de phosphate.

**39.** Procédé suivant la revendication 31, dans lequel la température des surfaces de verre à base de phosphate est élevée progressivement au cours de l'étape de maintien.

**40.** Dans un dispositif photonique comprenant un composant à base de verre au phosphate, perfectionnement dans lequel ledit constituant à base de verre au phosphate est un composite de verre de la revendication 2.

**41.** Dispositif photonique suivant la revendication 40, ledit dispositif photonique étant un réseau laser à longueurs d'ondes multiples.

**42.** Dispositif photonique suivant la revendication 41, ledit dispositif photonique étant un dispositif de dédoublement à faibles pertes.

**43.** Dispositif photonique suivant la revendication 42, ledit dispositif photonique étant un laser auto-refroidi.

**44.** Hybride comprenant un premier monolithe de verre au phosphate ; et un second monolithe, ledit second monolithe étant un verre, un revêtement métallique ou une matière cristalline, chaque monolithe pouvant être humidifié par une solution aqueuse ; et, entre et en contact avec lesdits monolithes, une solution contenant du phosphore, dans lequel ledit second monolithe est autre qu'un verre au phosphate.

**45.** Hybride suivant la revendication 44, dans lequel ledit second monolithe est un verre à base d'oxydes à constituants multiples, un verre non à base d'oxydes, un verre à base d'oxydes mixte ou un verre de $SiO_2$ pur.

**46.** Hybride suivant la revendication 45, dans lequel ledit second monolithe est un verre à base d'oxydes à constituants multiples qui est un verre à base de silicate, de phosphate, de borate, de germanate, de tellurure ou d'aluminate.

**47.** Hybride suivant la revendication 45, dans lequel ledit second monolithe est un verre non à base d'oxydes qui est un verre à base de chalcogénure, de fluorure, de fluorure de métal lourd ou de sulfure.

**48.** Hybride suivant la revendication 47, dans lequel ledit second monolithe est un verre de ZBLAN[2] ou $AS_2S_3$.

**49.** Hybride suivant la revendication 45, dans lequel ledit premier monolithe est un verre à base d'oxyde/fluorure mixte, qui est un verre au fluorophosphate.

**50.** Hybride suivant la revendication 44, dans lequel ledit second monolithe est une matière monocristalline.

**51.** Hybride suivant la revendication 50, dans lequel la matière monocristalline est une matière non semi-conductrice.

**52.** Hybride suivant la revendication 51, dans lequel la matière monocristalline est $LiNbO_3$, $CaF_2$, LiF, NaCl, AgCl, KI, AgBr ou $Al_2O_3$.

**53.** Hybride suivant la revendication 50, dans lequel la matière monocristalline est une matière semi-conductrice.

**54.** Hybride suivant la revendication 53, dans lequel la matière monocristalline est GaAs, InP, ZnZ, ZnSe, ZnTe, Si ou Ge.

**55.** Hybride suivant la revendication 44, dans lequel ledit second monolithe est constitué de $SiO_2$ pur, de $SiO_2$ de qualité pour télécommunications ou de $SiO_2$ dopé au Ge.

**56.** Hybride suivant la revendication 44, dans lequel ledit premier monolithe est un verre à base de phosphate ayant la composition

| Oxyde constitutif | % en poids |
| --- | --- |
| $P_2O_5$ | 55-75 |
| $Al_2O_3$ | 0-20 |
| $Re_2O_3$ | 0-15 |
| $La_2O_3$ | 0-15 |
| $Li_2O$ | 0-15 |
| $Na_2O$ | 0-15 |
| $K_zO$ | 0-15 |
| MgO | 0-15 |
| CaO | 0-15 |
| SrO | 0-15 |
| BaO | 0-15 |
| $As_zO_3$ | 0-3 |
| $Sb_2O_3$ | 0-3 |

$Re_2O_3$ représente n'importe quel oxyde de terres rares en plus de $La_2O_3$.

**57.** Hybride suivant la revendication 44, dans lequel ledit premier monolithe est un verre à base de fluorophosphate ayant la composition

| Oxyde constitutif | % en poids |
| --- | --- |
| $1/2\ P_2O_8$ | 5-30 |
| $AlF_3$ | 20-45 |
| $ReF_3$ | 0-8 |
| $LaF_3$ | 0,12 |
| LiF | 0-30 |
| NaF | 0-30 |

(suite)

| Oxyde constitutif | % en poids |
|---|---|
| KF | 0-30 |
| $MgF_z$ | 0-55 |
| $CaF_z$ | 0-55 |
| $SrF_z$ | 0-55 |
| $BaF_z$ | 0-55 |
| $As_zO_3$ | 0-3 |
| $Sb_zO_j$ | 0-3 |

$Re_2O_3$ représente n'importe quel oxyde de terres rares.

**58.** Hybride suivant la revendication 44, dans lequel ledit second monolithe est un verre à base de tellurure ayant la composition

| Verre à base de tellurure | % en poids |
|---|---|
| $TeO^2$ | 86,1 |
| ZnO | 11,7 |
| $Na_2O$ | 2,23 |

**59.** Hybride suivant la revendication 44, dans lequel ledit second monolithe est un verre à base de silicate ayant la composition

| Oxyde constitutif | % en poids |
|---|---|
| $SiO_2$ | 50-80 |
| $AlzO_3$ | 0-24 |
| $Re_zO_3$ | 0-15 |
| $La_2O_3$ | 0-15 |
| $B_2O_3$ | 0-18 |
| $R_2O$ R = Li, Na, K | 5-25 |
| $Li_2O$ | 0-25 |
| $Na_zO$ | 0-25 |
| $K_2O$ | 0-25 |
| MgO | 0-30 |
| CaO | 0-30 |
| SrO | 0-30 |
| BaO | 0-30 |
| ZnO | 0-30 |
| $TiO_2$ | 0-3 |
| $As_2O_3$ | 0-3 |
| $Sb_2O_3$ | 0-3 |
| F- | 0-12 |

$Re_2O_3$ représente n'importe quel oxyde de terres rares.

**60.** Hybride suivant la revendication 44, dans lequel ledit second monolithe est un verre à base de chalcogénure ayant pour composition 100 % de AsS.

**61.** Hybride suivant la revendication 44, dans lequel ledit second monolithe est un verre à base de fluorure de composition

| | |
|---|---|
| 53 | $ZrF_4$ |
| 20 | $BaF_2$ |

(suite)

| | |
|---|---|
| 4 | $LaF_3$ |
| 3 | $AlF_3$ |
| 20 | NaF |
| 0, 75 | $InF_3$, |

ce verre pouvant en outre dopé avec divers ions de terres rares ou autres ions à effet laser.

**62.** Hybride suivant la revendication 56, dans lequel ledit second monolithe est un verre à base de chalcogénure ayant pour composition 100 % de AsS.

**63.** Hybride suivant la revendication 56, dans lequel ledit second monolithe est un verre à base de tellurure de composition

| | |
|---|---|
| $TeO_2$ | 86,1 |
| ZnO | 11,7 |
| $Na_2O$ | 2,24. |

**64.** Hybride suivant la revendication 58, dans lequel ledit premier monolithe est un verre à base de fluorophosphate ayant la composition

| Oxyde constitutif | % en poids |
|---|---|
| 1/2 $P_2O_8$ | 5-30 |
| $AlF_3$ | 20-45 |
| $ReF_3$ | 0-8 |
| $LaF_3$ | 0,12 |
| LiF | 0-30 |
| NaF | 0-30 |
| KF | 0-30 |
| $MgF_z$ | 0-55 |
| $CaF_z$ | 0-55 |
| $SrF_z$ | 0-55 |
| $BaF_z$ | 0-55 |
| $As_zO_3$ | 0-3 |
| $Sb_zO_j$ | 0-3 |

dans laquelle $Re_2O_3$ représente n'importe quel oxyde de terres rares.

**65.** Hybride suivant la revendication 44, dans lequel ledit premier monolithe est un verre à base de phosphate ayant la composition

| Oxyde constitutif | % en poids |
|---|---|
| $P_2O_5$ | 55-75 |
| $Al_2O_3$ | 0-20 |
| $Re_2O_3$ | 0-15 |
| $La_2O_3$ | 0-15 |
| $Li_zO$ | 0-15 |
| $Na_zO$ | 0-15 |
| $K_zO$ | 0-15 |
| MgO | 0-15 |
| CaO | 0-15 |
| SrO | 0-15 |
| BaO | 0-15 |

(suite)

| Oxyde constitutif | % en poids |
|---|---|
| $As_zO_3$ | 0-3 |
| $Sb_2O_3$ | 0-3 |

dans laquelle $Re_2O_3$ représente n'importe quel oxyde de terres rares en plus de $La_2O_3$,
et le second monolithe est un $CaF_2$ monocristallin.

**66.** Hybride suivant la revendication 44, dans lequel ledit premier monolithe est un verre à base de phosphate ayant la composition

| Oxyde constitutif | % en poids |
|---|---|
| $P_2O_5$ | 55-75 |
| $Al_2O_3$ | 0-20 |
| $Re_2O_3$ | 0-15 |
| $La_2O_3$ | 0-15 |
| $Li_zO$ | 0-15 |
| $Na_zO$ | 0-15 |
| $K_zO$ | 0-15 |
| $MgO$ | 0-15 |
| $CaO$ | 0-15 |
| $SrO$ | 0-15 |
| $BaO$ | 0-15 |
| $As_zO_3$ | 0-3 |
| $Sb_2O_3$ | 0-3 |

dans laquelle $Re_2O_3$ représente n'importe quel oxyde de terres rares en plus de $La_2O_3$,
et le second monolithe est un $LiNbO_3$ monocristallin.

**67.** Hybride suivant la revendication 44, dans lequel la solution contenant du phosphore est une solution aqueuse d'acide phosphorique.

**68.** Hybride suivant la revendication 44, dans lequel la solution contenant du phosphore est une solution aqueuse d'acide phosphorique.

**69.** Hybride suivant la revendication 67, dans lequel la solution aqueuse d'acide phosphorique contient une quantité de phosphore équivalente à une quantité de 0,1 à 85 % en poids de $P_2O_5$.

**70.** Hybride suivant la revendication 44, dans lequel la solution comprend de l'eau en une quantité d'environ 50 à 99,9 % en poids,
du phosphore en une quantité équivalente à une quantité d'environ 0,1 à 35 % en poids de $P_2O_5$,
du $Na_2O$ en une quantité d'environ 0 à 20 % en poids,
du $Al_2O_3$ en une quantité d'environ 0 à 5 % en poids, et
du $SiO_2$ en une quantité d'environ 0 à 15 % en poids.

**71.** Hybride comprenant un premier monolithe de verre à base de phosphate et un second monolithe consistant en un verre, un revêtement métallique ou une matière cristalline, chaque monolithe pouvant être humidifié par une solution aqueuse ; ledit second monolithe étant autre qu'un verre à base de phosphate et, entre lesdits monolithes, une couche comprenant une solution durcie contenant du phosphore.

**72.** Hybride comprenant un premier monolithe de verre à base de phosphate et un second monolithe consistant en un verre, un revêtement métallique ou une matière cristalline, chaque monolithe pouvant être humidifié par une solution aqueuse ; ledit second monolithe étant autre qu'un verre à base de phosphate et, entre lesdits monolithes, une couche riche en phosphate condensée qui lie les monolithes.

**73.** Hybride suivant la revendication 72, dans lequel la couche de phosphate condensée contient des liaisons P-O-P et est rigide.

**74.** Hybride préparé en joignant un premier monolithe de verre à base de phosphate et un second monolithe consistant en un verre, un revêtement métallique ou une matière cristalline, chaque monolithe pouvant être humidifié par une solution aqueuse, et ledit second monolithe étant autre qu'un verre à base de phosphate, par durcissement entre ces monolithes d'une solution aqueuse contenant du phosphore.

**75.** Procédé d'assemblage d'un premier monolithe de verre à base de phosphate et d'un second monolithe, consistant en un verre, un revêtement métallique ou une matière cristalline, chaque monolithe pouvant être humidifié par une solution aqueuse, et ledit second monolithe étant autre qu'un verre à base de phosphate, par durcissement entre ces monolithes d'une solution aqueuse contenant du phosphore.

**76.** Procédé suivant la revendication 75, comprenant en outre un traitement thermique ultérieur.

**77.** Procédé suivant la revendication 79, dans lequel le traitement thermique est effectué à une température d'environ 30°C à environ 150°C.

1 µm

FIGURE 1

FIGURE 2

FIGURE 3

FIGURE 4

Active
Laser Glass

Passive
Laser Glass

Emission Direction
(1540 nm)

Joint Interface

Waveguide
Lasers

Passive Waveguides

Diode Pump Laser
(980 nm)

FIGURE 5

Laser Waveguide
Amplifiers
(4x1 splitter)

Active
Laser Glass

Emission Direction
(Amplified at 1540 nm)

Passive
Laser Glass

Joint Interface

Telecommunication
Wavelength
(1540 nm)

Pump Light
(980 nm)

FIGURE 6

**Preform:**
Joined By a
Low Temperature Process

Passive Glass

Active Glass

Cutting, Grinding
and Polishing

**Individual
Hybrid Glass Substrates**

Photolithography
and Ion Exchange

**Individual Device:**
No Active Alignment Necessary

FIGURE 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 09430885 B
- US 4075120 A
- US 4108673 A
- US 4239645 A
- US 4248732 A
- US 4406681 A
- US 4661284 A
- US 4770811 A
- US 4820662 A
- US 4929387 A
- US 5032315 A
- US 5039631 A
- US 5334559 A
- US 5491708 A
- US 5508235 A
- US 5526389 A
- US 5669997 A, Robbert
- US 5053251 A
- US 5143275 A, Hara
- US 3409198 A, Peterman
- US 5991493 A
- US 5926599 A
- US 5785874 A

### Non-patent literature cited in the description

- **N.J. Kreidl.** Inorganic Glass-Forming Systems. *Glass Science and Technology,* vol. 1, 107
- **S.A. Payne et al.** Spectroscopic Properties of Nd3+ Dopant Ions in Phosphate Laser Glasses. *Ceramic Transactions - Solid State Optical Materials,* 1992, vol. 28, 253
- **M.L. Elder et al.** Thermal-Mechanical and Physical-Chemical Properties of Phosphate Laser Glasses. *Ceramic Transactions - Solid State Optical Materials,* 1992, vol. 28, 261
- Effect of Phosphate Glass Composition on the Rate of Platinum Dissolution. *Ceramic Transactions - Solid State Optical Materials,* 1992, vol. 28, 283
- **S.E. Miller et al.** Opticl Fiber Telecommunications II. Academic Press, Inc, 1988
- **T.F. Stern et al.** Multiwavelength Optical Networks. Addison Wesley Longman, Inc, 1999
- **B.E.A. Salch et al.** Fundamentals of Photonics. John Wiley & Sons, Inc, 1991
- **Camy et al.** Ion Exchanged Planar Lossless Splitter at 1.5 $\mu$m. *Electronics Lett.,* 1996, vol. 32 (4), 321